(19) Europäisches Patentamt
European Patent Office
Office européen des brevets

(11) **EP 2 124 407 A1**

(12) **EUROPEAN PATENT APPLICATION**
published in accordance with Art. 153(4) EPC

(43) Date of publication:
**25.11.2009 Bulletin 2009/48**

(51) Int Cl.:
***H04L 27/00*** *(2006.01)*

(21) Application number: **08712028.3**

(22) Date of filing: **27.02.2008**

(86) International application number:
**PCT/JP2008/053406**

(87) International publication number:
**WO 2008/105457 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.02.2007 JP 2007046839**

(71) Applicant: **Tokyo University of Science, Educational Foundation Tokyo 162-8601 (JP)**

(72) Inventors:
• **MURAGUCHI, Masahiro**
  **Tokyo 162-8601 (JP)**
• **KIJIMA, Mitsutoshi**
  **Tokyo 162-8601 (JP)**
• **INADA, Yudai**
  **Tokyo 162-8601 (JP)**
• **SUZAKI, Kohei**
  **Iruma-shi**
  **Saitama 358-0046 (JP)**

(74) Representative: **Andersson, Björn E.**
  **Ström & Gulliksson AB**
  **P.O. Box 793**
  **220 07 Lund (SE)**

(54) **SIGNAL PROCESSING METHOD, SIGNAL PROCESSING DEVICE, RADIO RECEPTION DEVICE, AND COMMUNICATION RECEPTION DEVICE**

(57) It is possible to realize an ideal software reception device which can demodulate a higher-order modulation signal without losing vector information even if a carrier wave is sampled with a frequency lower than the carrier wave. A sampling frequency is set so that a phase relationship of the sampling point of an alias signal generated by sampling of a carrier with a sampling frequency lower than the carrier wave coincides with a phase relationship of the sampling point of the carrier wave. That is, the sampling frequency is set so that the carrier wave frequency "$f_c$" and the sampling frequency "$f_s$" satisfy the relationship $f_s = 4f_c/(4k+1)$, wherein k is a positive integer. Thus, it is possible to perform undersampling of the carrier wave while holding the vector information and demodulate a higher-order modulation such as QPSK and 64QAM.

FIG.1

**Description**

TECHNICAL FIELD

The present invention relates to a signal processing method that performs signal processing by converting a carrier wave from an analogue signal to a digital signal, a signal processing device, and a preferable wireless reception device used for realizing an ideal software defined radio reception device.

BACKGROUND ART

Various wireless systems such as a mobile phone and wireless LAN (Local Area Network) have been routinely used in daily life. However, for these systems there are various types of systems of course worldwide, but also only within Japan, and each terminal thereof is dedicated thereto. In addition, naturally, a wireless LAN terminal cannot be used as a mobile phone as it is. Although researchers for software defined radio devices have been trying to develop a device that can handle a plurality of systems simultaneously (for example, Non-Patent Document 1), many problems still have been left unsolved.

Recently, although almost all of the transmitted and received data of a wireless system is a digital signal, it is converted to an analogue signal by modulating a carrier wave in order to propagate in the air as a radio wave. A wireless receiver receives a modulated carrier wave and performs analogue signal processing, and at a prescribed point in time, samples the analogue signal and performs analogue-to-digital conversion (A/D conversion).

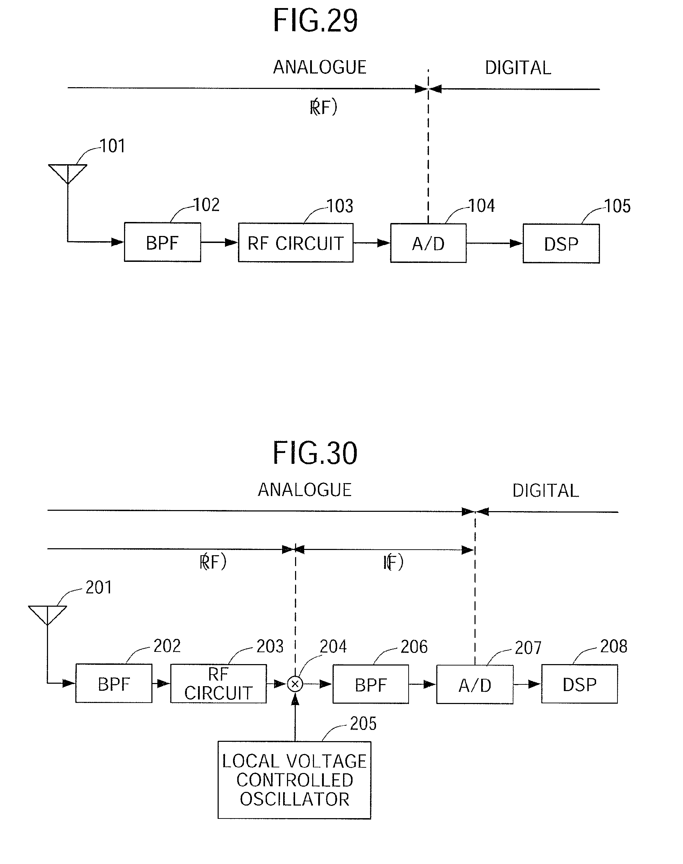

FIGS. 29 to 31 illustrate a configuration of a software defined radio receiver and the characteristics thereof. FIG. 29 shows a configuration in which a high-frequency carrier wave received is directly sampled and A/D converted, which is called a RF (Radio Frequency) sampling system. In this system, a received signal of an antenna 101 is supplied to an RF (Radio Frequency) circuit 103 via a system filter (for example BPF: Band Path filter). An output signal of the RF circuit 103 is supplied to the A/D converter 104, and at the A/D converter 104, the modulated carrier wave is converted to a digital signal directly. This modulated carrier wave, which is converted to the digital signal, is supplied to a DSP (Digital Signal Processor) 105. Then, at the DSP 105, necessary signal processing is performed at a digital circuit.

FIG. 30 identifies an IF sampling method by a configuration in which a carrier wave is converted to an intermediate frequency (IF) and sampled and A/D converted. In this system, a received signal of the antenna 201 is supplied to an RF circuit 203 via a system filter (for example BPF: Band-Pass Filter). An output signal of the RF circuit 203 is supplied to a mixer circuit 204. A local oscillation signal is supplied to the mixer circuit 204 from a local voltage controlled oscillator 205. In the mixer circuit 204, the modulated carrier wave thus received and the local oscillation signal are multiplied, and the modulated carrier wave is converted to an intermediate frequency signal. This intermediate frequency signal is supplied to the A/D converter 207 via a band-pass filter 206. In the A/D converter 207, the intermediate frequency signal is converted to a digital signal directly. Then, this intermediate frequency signal that is converted to a digital signal is supplied to the DSP 208. At the DSP 208, necessary signal processing is performed in a digital circuit.

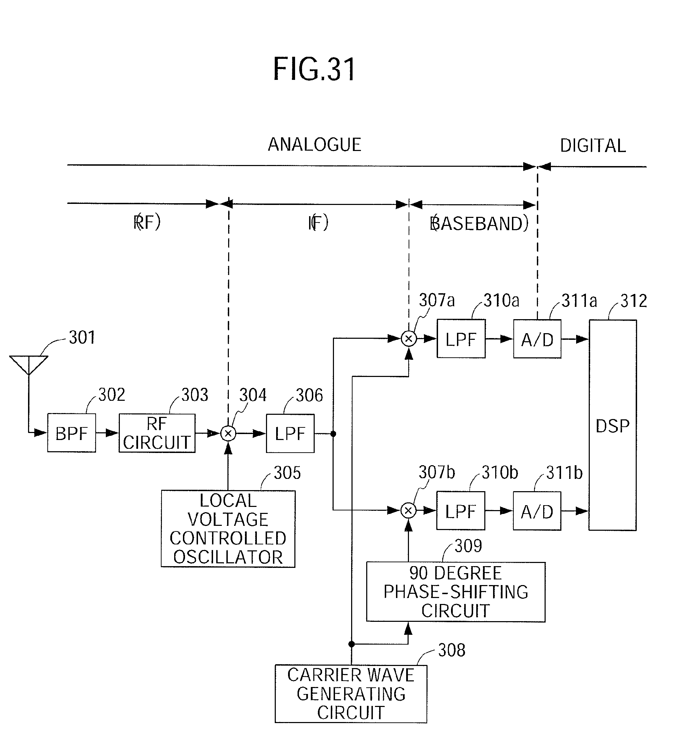

FIG. 31 identifies a base band sampling method by a configuration in which a carrier wave is converted to an intermediate frequency signal, further demodulated, converted to an analogue format baseband signal, and then A/D converted. In this system, a received signal of an antenna 301 is supplied to an RF circuit 303 via a system filter (for example BPF: Band-Pass Filter) 303. An output signal of an RF circuit 303 is supplied to a mixer circuit 304. A local oscillation signal is supplied to the mixer circuit 304 from a local voltage controlled oscillator 305. In the mixer circuit 304, the modulated carrier wave and the local oscillation signal are multiplied, and the modulated carrier wave is converted to an intermediate frequency signal. Then, this intermediate frequency signal is supplied to multiplier circuits 307a and 307b via a low-pass filter (LPF) 306.

Furthermore, a baseband modulated carrier wave from a carrier wave generating circuit 308 is supplied to the multiplier circuit 307a, and a baseband modulated carrier wave from a carrier wave generating circuit 308 is supplied to the multiplier circuit 307b via a 90 degree phase-shifting circuit 309. An I signal and a Q signal are demodulated by the multiplier circuits 307a and 307b.

The I signal and Q signal thus demodulated are supplied to the A/D converters 311a and 311b via the low-pass filters (LPF) 310a and 310b. At the A/D converters 311a and 311b, an 1-channel data signal and a Q-channel data signal are converted to a digital signal. Then, the I signal and Q signal that are converted to a digital signal are supplied to a DSP circuit 312, and at the DSP 312, necessary signal processing is performed.

[Non-Patent Document 1] "Sofutouea musen no kiso to ouyou (Software Defined Radio and Its Applications)" Kiyomichi Araki, SIPEC Ltd. October 31, 2002

DISCLOSURE OF THE INVENTION

Problems to be Solved by the Invention

Normally, since a circuit that is used for an analogue signal is adapted to be a single-system dedicated type, its adaptability for multiple systems is reduced. On the other hand, since a circuit that is used for a digital signal can perform general-purpose signal processing, its adaptability for multiple systems can be improved. Therefore, it is suitable for software defined radio devices to enhance the ratio of digital circuits, while using as few analogue circuits as possible so as in the receiver. That is, among the examples shown in FIGS. 29 to 31, the RF sampling system that directly samples and A/D converts a high frequency carrier wave is ideal, as shown in FIG. 29.

However, the RF sampling system requires extremely high sampling frequency. Additionally, recent mobile phone systems and wireless LAN use higher-order modulation such as QPSK (Quadrature Phase Shift Keying) and 64QAM (Quadrature Amplitude Modulation) and it is necessary to perform quadrature demodulation at a receiving side as a result of superimposing data with a carrier wave by a principle of quadrature modulation. To this end, a carrier wave has to be sampled with a 90 degree phase difference. That is, it has to be sampled at four sampling points per one cycle of a carrier wave, i.e. at a frequency that is four times the carrier wave frequency.

This means that, in wireless LAN and mobile phone systems employing the 2 GHz band, sampling is performed at a sampling frequency not less than 8 GHz and it is necessary for the resulting output to be A/D converted with high resolution of the order of 12 bit in real-time. However, an A/D converter with not less than 8 GHz of a sampling frequency and with high resolution as well as a subsequent high-speed signal processing circuit cannot be fabricated with current semiconductor technology. Accordingly, it can be considered that it is difficult to realize the foregoing at this point in time.

Given this situation, a software defined radio receiver with conventional technology has been considered with the configuration of the IF sampling system as shown in FIG. 30, and therefore systems that can be adapted are limited.

Thus, the present invention has been made in view of the abovementioned problem. Accordingly, it is an object of the present invention to provide a signal processing method, a signal processing device, and a wireless reception device that is configured so as to be able to demodulate a higher-order modulation signal without losing vector information, even if a carrier wave is sampled at a frequency lower than the carrier wave and to realize an effect equivalent to the RF sampling system using undersampling.

Means for Solving the Problems

The present invention has proposed the following items for solving the abovementioned object. In a first aspect of the present invention, a signal processing method is proposed in which a signal processing method for sampling a carrier wave at a sampling frequency lower than a frequency of the carrier wave and converting from an analogue signal to a digital signal, sets the sampling frequency so that a phase relationship of a sampling point of an alias signal generated by sampling the carrier wave at a sampling frequency lower than the frequency of the carrier wave coincides with a phase relationship of a sampling point of the carrier wave.

In a second aspect of the present invention, a signal processing method is proposed in which a signal processing method for sampling a carrier wave at a sampling frequency lower than a frequency of the carrier wave and converting from an analogue signal to a digital signal, sets the sampling frequency so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$.

In a third aspect of the present invention, a signal processing method is proposed in which a signal processing method for sampling a modulated carrier wave S1 at a sampling frequency lower than a frequency of the modulated carrier wave S1, and converting from an analogue signal to a digital signal, includes: an outputting step of outputting a local oscillation signal S2 having a predetermined frequency from a local voltage controlled oscillator; a setting step of setting the sampling frequency $f_s$ so that a relationship between a frequency $f_c$ of the local oscillation signal S2 and the sampling frequency $f_s$ satisfies $f_s = 4f_c/(4k+1)$, wherein k is a positive integer; a first sampling step of sampling the modulated carrier wave S1 by the local oscillation signal S2; a first comparison step of comparing a signal obtained in the first sampling step with a constant signal; a second sampling step of sampling a signal having a phase difference θ $(0<θ<π)$ with respect to the modulated carrier wave S1 by the local oscillation signal S2; a second comparison step of comparing a signal obtained in the second sampling step with the constant signal; a first computing step of computing whether a frequency of the modulated carrier wave S1 is higher or lower than a frequency of the local oscillation signal S2 based on a signal $V_1(t)$ obtained in the first comparison step and a signal $V_2(t)$ obtained in the second comparison step; a second computing step of computing a difference between a frequency of the modulated carrier wave S1 and a frequency of the local oscillation signal S2 based on the signal $V_1$; a multiplication step of multiplying a signal $V_3(t)$ obtained in the first computing step with a signal $V_4(t)$ obtained in the second computing step; and a DC voltage generating step of supplying a DC voltage to the local voltage controlled oscillator based on a signal $V_5(t)$ obtained in the multiplication step, in which the outputting step modulates a frequency $f_c$ of the local oscillation signal S2 according to the DC voltage.

In a fourth aspect of the present invention, a signal processing device is proposed in which a signal processing device that performs signal processing of sampling a carrier wave at a sampling frequency lower than a frequency of the carrier wave and converting from an analogue signal to a digital signal, includes: an A/D converting means for converting the carrier wave from an analogue signal to a digital signal; and a sampling signal generating means for generating a sampling signal for sampling the carrier wave at a sampling frequency so that a phase relationship of a sampling point of an alias signal generated by sampling the carrier wave at a sampling frequency lower than the frequency of the carrier wave coincides with a phase relationship of a sampling point of the carrier wave.

In a fifth aspect of the present invention, a signal processing device is proposed in which a signal processing device that performs signal processing of sampling a carrier wave at a sampling frequency lower than a frequency of the carrier wave and converting from an analogue signal to a digital signal, includes: an A/D converting means for converting the carrier wave from an analogue signal to a digital signal; and a sampling signal generating means for generating a sampling signal for sampling the carrier wave with a sampling frequency so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$.

In a sixth aspect of the present invention, a signal processing device is proposed in which a signal processing device that performs signal processing of sampling a modulated carrier wave S1 at a sampling frequency lower than a frequency of the modulated carrier wave S1 and converting from an analogue signal to a digital signal, includes: a local oscillation means for outputting a local oscillation signal S2 having a predetermined frequency; a setting means for setting a sampling frequency $f_s$ so that a relationship between a frequency $f_c$ of the local oscillation signal S2 and the sampling frequency $f_s$ satisfies $f_s = 4f_c/(4k+1)$, wherein k is a positive integer; a first sampling means for sampling the modulated carrier wave S1 by the local oscillation signal S2; a first comparison means for comparing a signal obtained by the first sampling means with a constant signal; a second sampling means for sampling a signal having a phase difference $\theta$ $(0<\theta<\pi)$ with respect to the modulated carrier wave S1 by the local oscillation signal S2; a second comparison means for comparing a signal obtained by the second sampling means with the constant signal; a first computing means for computing whether a frequency of the modulated carrier wave S1 is higher or lower than a frequency of the local oscillation signal S2 based on a signal $V_1(t)$ obtained by the first comparison means and a signal $V_2(t)$ obtained by the second comparison means; a second computing means for computing a difference between a frequency of the modulated carrier wave S1 and a frequency of the local oscillation signal S2 based on the signal $V_1$; a multiplication means for multiplying a signal $V_3(t)$ obtained by the first computing means with a signal $V_4(t)$ obtained by the second computing means; and a DC voltage generating means for supplying a DC voltage to the local oscillation means based on a signal $V_5(t)$ obtained by the multiplication means, in which the local oscillation means modulates a frequency $f_c$ of the local oscillation signal S2 according to the DC voltage.

In a seventh aspect of the present invention, a wireless reception device is proposed in which a wireless reception device that receives a carrier wave modulated by quadrature modulation, samples the carrier wave thus received, and performs conversion from an analogue signal to a digital signal, includes: an A/D converting means for converting the carrier wave from an analogue signal to a digital signal; a sampling signal generating means for generating a sampling signal for sampling the carrier wave at a sampling frequency so that a phase relationship of a sampling point of an alias signal generated by sampling the carrier wave with a sampling frequency lower than the frequency of the carrier wave coincides with a phase relationship of a sampling point of the carrier wave; and a demodulating means for demodulating data of an I-channel and data of a Q-channel from a signal sampled by the A/D converting means.

In an eighth aspect of the present invention, a wireless reception device is proposed in which a wireless reception device that receives a carrier wave S1 modulated by quadrature modulation, samples the modulated carrier wave S1, and performs conversion from an analogue signal to a digital signal, includes: an A/D converting means for converting the modulated carrier wave S1 from an analogue signal to a digital signal; a sampling signal generating means for generating a sampling signal for sampling the modulated carrier wave S1 at a frequency $f_s$ of a sampling signal so that a phase relationship of a sampling point of an alias signal generated by sampling the modulated carrier wave S1 at a sampling frequency lower than the frequency of the modulated carrier wave S1 coincides with a phase relationship of a sampling point of the modulated carrier wave S1; and a demodulating means for demodulating data of an I-channel and data of a Q-channel from a signal sampled by the A/D converting means, in which the sampling signal generating means includes: a local oscillation means for outputting a local oscillation signal S2 having a predetermined frequency; a setting means for setting the sampling frequency $f_s$ so that a relationship between a frequency $f_c$ of the local oscillation signal S2 and the frequency $f_s$ of the sampling signal satisfies $f_s = 4f_c/(4k+1)$, wherein k is a positive integer; a first sampling means for sampling the modulated carrier wave S1 by the local oscillation signal S2; a first comparison means for comparing a signal obtained by the first sampling means with a constant signal; a second sampling means for sampling a signal having a phase difference $\theta$ $(0<\theta<\pi)$ with respect to the modulated carrier wave S1 by the local oscillation signal S2; a second comparison means for comparing a signal obtained by the second sampling means with the constant signal; a first computing means for computing whether a frequency of the modulated carrier wave S1 is higher or lower than a frequency of the local oscillation signal S2 based on a signal $V_1(t)$ obtained by the first comparison means and a signal $V_2(t)$ obtained by the second comparison means; a second computing means for computing a difference between a frequency of the modulated carrier wave S1 and a frequency of the local oscillation signal S2 based on the signal $V_1$; a multiplication means for multiplying a signal $V_3(t)$ obtained by the first computing means with a signal $V_4(t)$ obtained by the second computing means; and a DC voltage generating means for supplying a DC voltage to the local oscillation means based on a signal $V_5(t)$ obtained by the multiplication means, in which the local oscillation means modulates a frequency $f_c$ of the local oscillation signal S2 according to the DC voltage.

In a ninth aspect of the present invention, a communication reception device is proposed in which a communication reception device that receives a carrier wave modulated by quadrature modulation, samples the carrier wave thus received, and performs conversion from an analogue signal to a digital signal, includes: an A/D converting means for converting the carrier wave from an analogue signal to a digital signal; a sampling signal generating means for generating a sampling signal for sampling the carrier wave at a sampling frequency so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$; and a demodulating means for demodulating data of an I-channel and data of a Q-channel, which are two types of data orthogonal, from a signal sampled by the A/D converting means.

In a tenth aspect of the present invention, a wireless reception device is proposed in which a communication reception device that receives a carrier wave S1 modulated by quadrature modulation, samples the modulated carrier wave S1, and performs conversion from an analogue signal to a digital signal, includes: an A/D converting means for converting the modulated carrier wave S1 from an analogue signal to a digital signal; and a sampling signal generating means for generating a sampling signal for sampling the modulated carrier wave S1 at a frequency $f_s$ of a sampling signal so that a phase relationship of a sampling point of an alias signal generated by sampling the modulated carrier wave S1 at a sampling frequency lower than the frequency of the modulated carrier wave S1 coincides with a phase relationship of a sampling point of the modulated carrier wave S1; and a demodulating means for demodulating data of an 1-channel and data of a Q-channel, which are two types of data orthogonal, from a signal sampled by the A/D converting means, in which the sampling signal generating means comprises: a local oscillation means for outputting a local oscillation signal S2 having a predetermined frequency; a setting means for setting the sampling frequency $f_s$ so that a relationship between a frequency $f_c$ of the local oscillation signal S2 and the frequency $f_s$ of the sampling signal satisfies $f_s = 4f_c/(4k+1)$, wherein k is a positive integer; a first sampling means for sampling the modulated carrier wave S1 by the local oscillation signal S2; a first comparison means for comparing a signal obtained by the first sampling means with a constant signal; a second sampling means for sampling a signal having a phase difference $\theta$ ($0<\theta<\pi$) with respect to the modulated carrier wave S1 by the local oscillation signal S2; a second comparison means for comparing a signal obtained by the second sampling means with the constant signal; a first computing means for computing whether a frequency of the modulated carrier wave S1 is higher or lower than a frequency of the local oscillation signal S2 based on a signal $V_1(t)$ obtained by the first comparison means and a signal $V_2(t)$ obtained by the second comparison means; a second computing means for computing a difference between a frequency of the modulated carrier wave S1 and a frequency of the local oscillation signal S2 based on the signal $V_1$; a multiplication means for multiplying a signal $V_3(t)$ obtained by the first computing means with a signal $V_4(t)$ obtained by the second computing means; and a DC voltage generating means for supplying a DC voltage to the local oscillation means based on a signal $V_5(t)$ obtained by the multiplication means, in which the local oscillation means modulates a frequency $f_c$ of the local oscillation signal S2 according to the DC voltage.

In an eleventh aspect of the present invention, a signal processing method is proposed in which a signal processing method includes: an outputting step of outputting a local oscillation signal S2 having a predetermined frequency from a local voltage controlled oscillator; a first sampling step of sampling an input signal S1 by the local oscillation signal S2; a first comparison step of comparing a signal obtained in the first sampling step with a constant signal; a second sampling step of sampling a signal having a phase difference $\theta$ ($0<\theta<\pi$) with respect to the input signal S1 by the local oscillation signal S2; a second comparison step of comparing a signal obtained in the second sampling step with the constant signal; a first computing step of computing whether a frequency of the input signal S1 is higher or lower than a frequency of the local oscillation signal S2 based on a signal $V_1(t)$ obtained in the first comparison step and a signal $V_2(t)$ obtained in the second comparison step; a second computing step of computing a difference between a frequency of the input signal S1 and a frequency of the local oscillation signal S2 based on the signal $V_1$; a multiplication step of multiplying a signal $V_3(t)$ obtained in the first computing step with a signal $V_4(t)$ obtained in the second computing step; and a DC voltage generating step of supplying a DC voltage to the local voltage controlled oscillator based on a signal $V_5(t)$ obtained in the multiplication step, in which the outputting step modulates a frequency $f_c$ of the local oscillation signal S2 according to the DC voltage.

In a twelfth aspect of the present invention, a signal processing method is proposed in which a signal processing method includes: an outputting step of outputting a local oscillation signal S2 having a predetermined frequency; a first sampling step of sampling an input signal S1 by the local oscillation signal S2; a first amplifying step of amplifying a signal obtained in the first sampling step; a second sampling step of sampling a signal having a phase difference θ (0<θ<π) with respect to the input signal S1 by the local oscillation signal S2; a second amplifying step of amplifying a signal obtained in the second sampling step; a computing step of computing whether a frequency of the input signal S1 is higher or lower than a frequency of the local oscillation signal S2 based on a signal $V_1(t)$ obtained in the first amplifying step and a signal $V_2(t)$ obtained in the second amplifying step; a holding step of temporarily holding the signal $V_1(t)$ obtained in the first amplifying step; a first switching step of outputting a signal held in the holding step according to a signal supplied from the computing step; and a second switching step of outputting a signal held in the holding step according to an inversion signal supplied from the computing step.

In a thirteenth aspect of the present invention, a signal processing device is proposed in which a signal processing device includes: a local oscillation means for outputting a local oscillation signal S2 having a predetermined frequency; a first sampling means for sampling an input signal S1 by the local oscillation signal S2; a first comparison means for comparing a signal obtained by the first sampling means with a constant signal; a second sampling means for sampling a signal having a phase difference θ (0<θ<π) with respect to the input signal S1 by the local oscillation signal S2; a second comparison means for comparing a signal obtained by the second sampling means with the constant signal; a first computing means for computing whether a frequency of the input signal S1 is higher or lower than a frequency of the local oscillation signal S2 based on a signal $V_1(t)$ obtained by the first comparison means and a signal $V_2(t)$ obtained by the second comparison means; a second computing means for computing a difference between a frequency of the input signal S1 and a frequency of the local oscillation signal S2 based on the signal $V_1$; a multiplication means for multiplying a signal $V_3(t)$ obtained by the first computing means with a signal $V_4(t)$ obtained by the second computing means; and a DC voltage generating means for supplying a DC voltage to the local oscillation means based on a signal $V_5(t)$ obtained by the multiplication means, in which the local oscillation means modulates a frequency $f_c$ of the local oscillation signal S2 according to the DC voltage.

In a fourteenth aspect of the present invention, a signal processing device is proposed in which a signal processing device includes: a local oscillation means for outputting a local oscillation signal S2 having a predetermined frequency; a first sampling means for sampling an input signal S1 by the local oscillation signal S2; a first amplifying means for amplifying a signal obtained by the first sampling means; a second sampling means for sampling a signal having a phase difference θ (0<θ<π) with respect to the input signal S1 by the local oscillation signal S2; a second amplifying means for amplifying a signal obtained by the second sampling means; a computing means for computing whether a frequency of the input signal S1 is higher or lower than a frequency of the local oscillation signal S2 based on a signal $V_1(t)$ obtained by the first amplifying means and a signal $V_2(t)$ obtained by the second amplifying means; a holding means for temporarily holding the signal $V_1(t)$ obtained by the first amplifying means; a first switching means for outputting a signal held in the holding means according to a signal supplied from an output terminal of the computing means; and a second switching means for outputting a signal held in the holding means according to a signal supplied from an inverted output terminal from the computing means.

Effects of the Invention

According to the present invention, the sampling frequency is set so that a phase relationship of a sampling point of an alias signal generated by sampling a carrier wave at a sampling frequency lower than the frequency of the carrier wave coincides with a phase relationship of a sampling point of the carrier wave. That is, in the present invention, the sampling frequency is set so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$.

Therefore, it is possible to obtain information equivalent to that in a case of sampling a carrier wave with a 90 degree phase difference precisely in spite of undersampling, demodulate a higher-order modulation signal such as QPSK and 64QAM, and realize an effect equivalent to that of the RF sampling method with a much lower sampling frequency. Herewith, it is possible to configure an ideal software defined radio receiver. In addition, it can be applied to most mobile phones and wireless LAN systems that have been recently available. Furthermore, since it can substantially eliminate analogue components, an integrated circuit can be made on a single chip of a receiver, as a result of which, there is an effect that microminiaturization of the receiver is possible.

BRIEF DESCRIPTION OF THE DRAWINGS

FIG. 1 is a block diagram according to an embodiment of the present invention;
FIG. 2 is a waveform diagram illustrating a relationship between a carrier wave frequency and a sampling frequency according to an embodiment of the present invention;

FIG. 3 is a block diagram used in the explanation of QPSK modulation;

FIG. 4 is a constellation showing a signal arrangement of QPSK on a phase-shifting plane;

FIG. 5 is a diagram showing a relationship between a QPSK wavelength and a sampling point when data of (0,0) is transmitted;

FIG. 6 a constellation showing a relationship between a constellation of data of (0,0) and a sampling point;

FIG. 7 is a block diagram according to another embodiment of the present invention;

FIG. 8 is a diagram showing a relationship between a received waveform and a sampling point;

FIG. 9 is a block diagram according to another embodiment of the present invention;

FIG. 10 is an explanatory diagram for phase-shifting and frequency control according to yet another embodiment of the present invention;

FIG. 11 is a waveform diagram of an input/output signal of a demonstration circuit using the present invention;

FIG. 12 is a constellation of an output signal of a demonstration using the present invention;

FIG. 13 is a block diagram showing a configuration of a circuit that adjusts a frequency of a modulated carrier wave;

FIG. 14 is a block diagram showing a first configuration of a sampling frequency comparator;

FIG. 15 is a diagram showing a relationship between output signals $V_1(t)$ and $V_2(t)$ of S/Ha and S/Hb and an output signal $V_3(t)$ of a DFF portion in a case in which a frequency of a compared signal is higher than a frequency of a comparison signal (S1>S2);

FIG. 16 is a diagram showing a relationship between output signals $V_1(t)$ and $V_2(t)$ of S/Ha and S/Hb and an output signal $V_3(t)$ of a DFF portion in a case in which a frequency of a compared signal is lower than a frequency of a comparison signal (S1>S2);

FIG. 17 is a diagram showing an output signal $V_4(t)$ of an NOR circuit;

FIG. 18 is a diagram showing a waveform of a signal $V_6(t)$ outputted from an LPF corresponding to a magnitude relationship between $f_{VCO}$ and $f_{RF}$;

FIG. 19 is a diagram showing a waveform of a signal $V_6(t)$ outputted from an LPF corresponding to a difference between $f_{VCO}$ and $f_{RF}$;

FIG. 20 is a block diagram showing a second configuration of a sampling frequency comparator;

FIG. 21 is a diagram showing a relationship between $V_1(t)$ and $V_2(t)$ in a case of $f_{RF}>f_{in}$;

FIG. 22 is a diagram showing a relationship between $V_1(t)$ and $V_2(t)$ in a case of $f_{RF}<f_{in}$;

FIG. 23 is a diagram showing a relationship of a number of output pulses with respect to an input frequency $f_{in}$ in a case in which $V_{RF}$ is 2.0GHz;

FIG. 24 is a circuit diagram showing a traveling-wave-type sample and hold circuit;

FIG. 25 is a circuit diagram showing an RF sample and hold circuit;

FIG. 26 is a diagram showing an output of a sample and hold circuit based on a relationship between $V_{RF}$ and $V_{in}$;

FIG. 27 is a diagram showing a relationship between $V_4(t)$ and $V_1(t)$ in a case of $f_{RF}>Nf_{in}$;

FIG. 28 is a diagram showing a relationship between $V_4(t)$ and $V_1(t)$ in a case of $f_{RF}<Nf_{in}$;

FIG. 29 is a block diagram of an example of a conventional software receiver;

FIG. 30 is a block diagram of another example of a conventional software receiver; and

FIG. 31 is a block diagram of yet another example of a conventional software receiver.

EXPLANATION OF REFERENCE NUMERALS

11, 31 antenna

12, 32 RF circuit

13, 33 A/D converter

14, 34 sampling signal generation circuit

20 carrier wave generating circuit

21 phase-shifting circuit

23a, 23b binary phase shift keying circuit

24 adder circuit

35a, 35b extracting circuit

36a, 36b low-pass filter

41 subtracting circuit

42 loop filter

43 direct digital synthesizer

50 sampling frequency comparator

51 S/H portion

52, 80 frequency comparator

53 pulse generation circuit

54 S/Ha

55 delay portion

56 S/Hb

57 voltage controlled oscillator (VCO)

58 first comparator

59 second comparator

60 difference detection circuit

61 computing circuit

62 multiplier

63 LPF

64 NOT circuit

65 delay element

66 NOR circuit

67 DFF portion

68 differential device

70 setting unit

71 external DC unit

81 first saturation amplifier

82 second saturation amplifier

83 buffer

84 first switch portion

85 second switch portion

PREFERRED MODE FOR CARRYING OUT THE INVENTION

In the following, embodiments of the present invention are described with reference to the drawings. It should be noted that components of the present embodiments can be appropriately replaced with existing components and various variations, including combinations with other existing components, can be made. Therefore, the descriptions in the present embodiments do not limit the contents of the present invention that are described in the scope of the claims of the present invention.

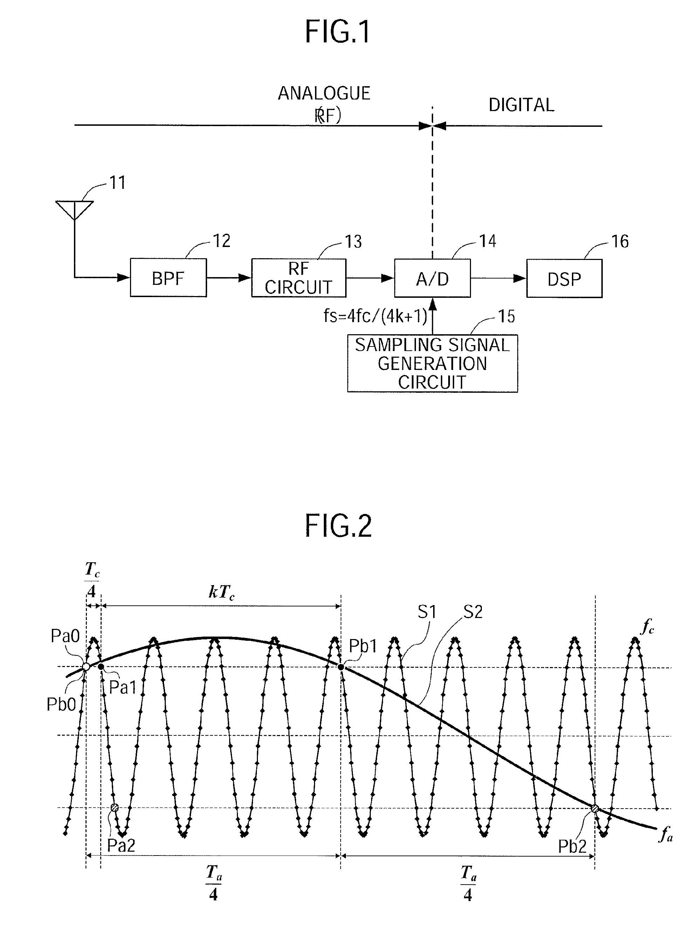

FIG. 1 shows a receiving device according to an embodiment of the present invention.

In FIG. 1, a received signal of an antenna 11 is supplied to an RF circuit 13 via a system filter (for example BPF: Band-Pass Filter) 12, and a received signal of a desired carrier wave is outputted from the RF circuit 13. This received signal is supplied to an A/D converter 14.

The A/D converter 14 samples and digitalizes a carrier wave received with a sampling frequency lower than the frequency of the carrier wave by a sampling signal from a sampling signal generation circuit 15. In an embodiment of the present invention, this sampling frequency is set to a frequency such that a phase relationship of a sampling point of an alias signal, which is generated by sampling a carrier wave at a sampling frequency lower than the carrier wave, coincides with a phase relationship of the sampling point of the carrier wave. As an example, a sampling frequency $f_s$ is $f_s = 4f_c/(4k+1)$, where a carrier wave frequency is fc and k is a positive integer. By setting such a sampling frequency, it is possible to obtain information equivalent to that in a case of sampling a carrier wave with a desired phase relationship in spite of undersampling.

In addition, an output signal of the A/D converter 14 is transmitted to a DSP 16. At the DSP 16, necessary processing is performed in a digital circuit.

Thus, in the first embodiment of the present invention, a sampling frequency is set so that a phase relationship of a sampling point of a signal generated as an alias coincides with a phase relationship of the sampling point of the carrier wave. Herewith, it is possible to undersample the carrier wave while retaining vector information. This matter is described below.

FIG. 2 shows a case in which a carrier wave is undersampled at a sampling frequency lower than a carrier wave frequency. In FIG. 2, S1 is a carrier wave and S2 is an alias signal generated by the undersampling. As shown in FIG. 2, when the carrier wave S1 is sampled at a sampling frequency lower than a carrier wave frequency, an alias signal is generated.

When such an alias signal S2 is generated, an original carrier wave S1 cannot be distinguished from the alias signal S2. Therefore, if noise or an interference wave of a frequency that is the same as that of the alias is inputted from outside, separation therebetween cannot be achieved.

In order to prevent from being affected by aliasing distortion, it is necessary to perform sampling at a frequency not less than double a frequency of a carrier wave. However, in wireless communication, transmission digital data (baseband signal) is carried on a carrier wave by modulation, and thus a frequency of a carrier wave itself does not include information. In a case of higher-order modulation such as QPSK modulation and higher-order QAM modulation, as long as vector information is not lost, it is not necessary to reproduce a carrier wave precisely at a receiving side. The vector information can be retained by setting a sampling frequency to a frequency at which a phase relationship of a sampling point of a signal generated as an alias coincides with a phase relationship of the sampling point of the carrier wave.

That is, in higher-order demodulation, since modulation is performed using an I axis and a Q axis that are orthogonal to each other, a carrier wave is orthogonal-sampled with such a relationship of 90 degree phase difference. In this case, if an alias frequency can be obtained in which a sampling point having a relationship of 90 degree phase difference with respect to the alias signal S2 generated by undersampling sequentially coincides with a sampling point having a relationship of 90 degree phase difference with respect to the carrier wave S1, by orthogonal-sampling a signal of this alias frequency, a result equivalent to that obtained by orthogonal-sampling the carrier wave frequency can be obtained.

That is, in FIG. 2, a sampling point at which the carrier wave S1 is sampled with 90 degree phase difference is Pa0, Pa1, Pa2.... On the other hand, in FIG. 2, a sampling point at which the alias signal S2 is sampled with 90 degree phase difference is Pb0, Pb1, Pb2.... In FIG. 2, a frequency of the alias signal S2 is obtained so that the sampling points Pb0, Pb1, Pb2... having a relationship of 90 degree phase difference with respect to the alias signal S2 sequentially coincides with the sampling point having a relationship of 90 degree phase difference with respect to the carrier wave S1.

Provided that a frequency of the carrier wave S1 is $f_c$ and a frequency of the alias signal S2 is $f_a$, each of $T_c$ as a cycle of the carrier wave S1 and $T_a$ as a cycle of the alias signal S2 is as follows.

$$T_a = 1/f_a \quad (1)$$

$$T_c = 1/f_c \quad (2)$$

Since a coordinate position of the integral multiple of one cycle becomes the same position on the IQ vector plane, it can be considered to be an identical phase relationship. For this reason, a relationship such that the sampling points Pb0, Pb1, Pb2..., having a relationship of 90 degree phase difference with respect to the alias signal S2, sequentially coincide with the sampling point, having a relationship of 90 degree phase difference with respect to the carrier wave S1, is as follows.

$$T_a/4 = (T_c/4) + kT_c \quad (3)$$

(k = positive integer)

$$T_a = 1/f_a$$

$$T_c = 1/f_c$$

Therefore, upon the relationship shown in the formula (3) being expressed as a relationship of frequency, the result is as follows.

$$1/4f_a = (1/4f_c) + (k/f_c) = (1+4k)/4f_c$$

$$f_a \;=\; f_c / (4k+1) \qquad (4)$$

Thus, as long as the abovementioned relationship is satisfied, the orthogonal sampling point of the alias frequency sequentially coincides with the orthogonal sampling point of the carrier wave frequency.

Since a frequency $f_s$ that samples the alias frequency $f_a$ at every 90 degree phase is $f_s = 4f_a$, the relationship between a sampling frequency $f_s$ and the carrier wave frequency $f_c$ is as follows.

$$f_s \;=\; 4f_c / (4k+1) \qquad (5)$$

Assuming four consecutive sampling points of this sampling frequency $f_s$ as a set, if two consecutive points thereamong are extracted, orthogonal sampling of the carrier wave frequency $f_c$ can be performed.

Next, as an embodiment of the present invention, an example of a receiving device using QPSK is described.

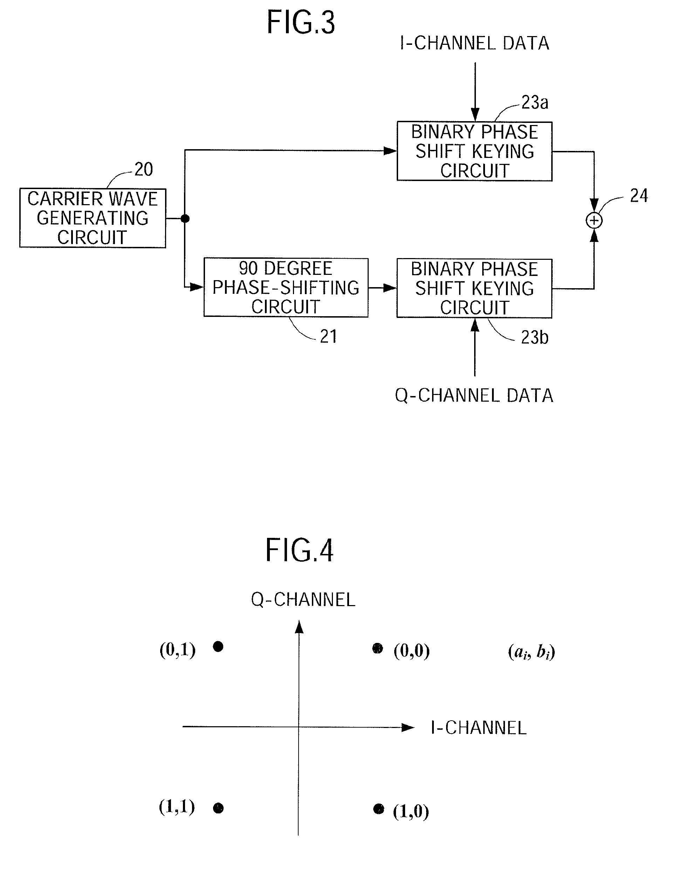

FIG. 3 shows a configuration of a QPSK direct quadrature modulator.

In FIG. 3, a baseband carrier wave from a carrier wave generating circuit 20 is supplied to a binary phase shift keying circuit 23a, as well as being 90 degree phase-shifted by a phase-shifting circuit 21 and supplied to a binary phase shift keying circuit 23b. I-channel data is supplied to the binary phase shift keying circuit 23a and Q-channel data is supplied to the binary phase shift keying circuit 23b. The binary phase shift keying is performed by the I-channel data and the Q-channel data in the binary phase shift keying circuits 23a and 23b, respectively. Output signals of these binary phase shift keying circuits 23a and 23b are summed signal voltages by an adder circuit 24 and outputted.

As shown in FIG. 3, in the QPSK modulation, a baseband carrier wave is distributed with 90 degree phase difference, the binary phase shift keying is performed using two independent data sets, i.e. the I-channel data and the Q-channel data in the binary phase shift keying circuits 23a and 23b, respectively, and then vector summed signal voltages in-phase in the adder circuit 24 so as to become a quadrature phase shift keying signal.

Since this quadrature phase shift keying signal s(t) is made by vector addition of a modulation signal $s_I(t)$ of the I-channel and a modulation signal $s_Q(t)$ of the Q-channel, it is represented by the following formula.

$$s(t) = s_I(t) + s_Q(t) = \cos(2\pi f_c t + b_i \pi) - \sin(2\pi f_c t + a_i \pi)$$
$$= \beta_i \cos 2\pi f_c t - \alpha_i \sin 2\pi f_c t$$

$$\text{Q-channel data} \qquad\qquad \text{I-channel data}$$

$$\alpha_i = \begin{cases} 1 & (a_i = 0) \\ -1 & (a_i = 1) \end{cases} \qquad\qquad \beta_i = \begin{cases} 1 & (b_i = 0) \\ -1 & (b_i = 1) \end{cases}$$

FIG. 4 shows a signal position (constellation) on a phase plane of QPSK modulation, and when the data displayed in a form of $(a_i,b_i)$ is (0,0), it is located at 45 degrees in the first quadrant.

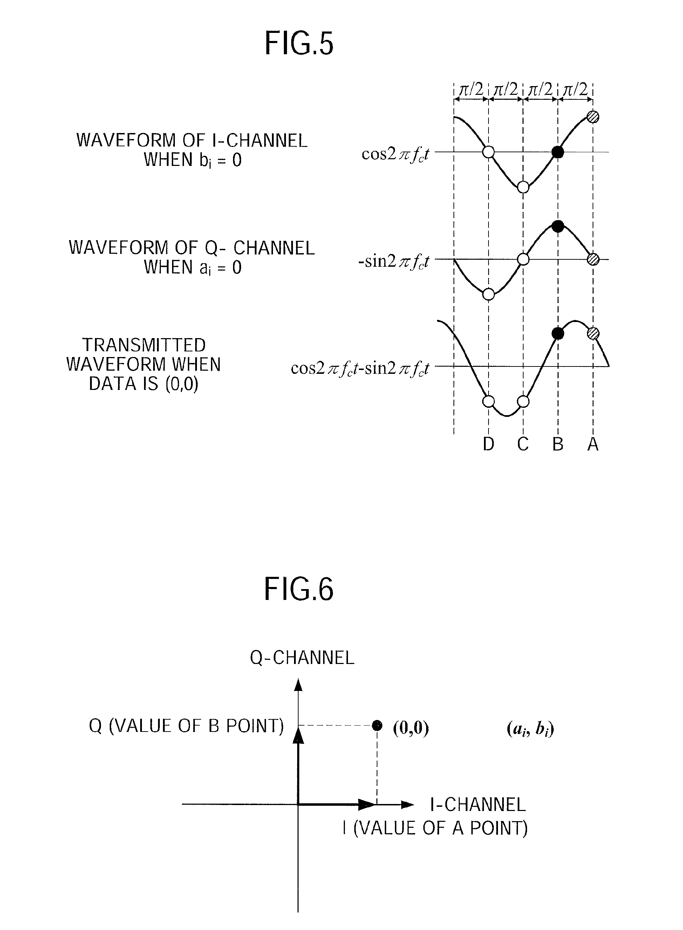

Next, a relationship between a transmitted waveform and a sampling point when data is (0,0) is verified. FIG. 5 shows that a waveform of the I-channel, a waveform of the Q-channel, and a transmitted waveform of the QPSK are aligned based on a common temporal axis.

It is assumed that sampling is performed at four points in 90 degree intervals ($\pi/2$ interval) in a cycle and the four sampling points are point A, point B, point C, and point D. In FIG. 5, upon viewing point A, the amplitude of a waveform of the Q-channel is zero and amplitude of a transmitted waveform is the same as that of the waveform of the I-channel. At this time, a component of the Q-channel is not included. On the other hand, point B only includes a component of the Q-channel and does not include a component of the I-channel. Thus, among the four sampling points, it is understood that point A and point B are special sampling points that can be obtained such that the data of the I-channel becomes separated from the data of the Q-channel.

FIG. 6 is a constellation showing that the I-channel data and the Q-channel data that are sampled at point A and point B are displayed on a phase plane of signal. Thus, it is understood that it is transmitted data and falls at the position (0,0).

As described above, the four sampling points in 90 degree intervals ($\pi/2$ interval) in a cycle are special sampling points that can be obtained such that the data of the I-channel becomes separated from the data of the Q-channel. In the same way even in undersampling, these points become special points that can be obtained such that the data of the I-channel becomes separated from the data of the Q-channel. In the embodiment of the present invention, by sampling a received signal at a sampling frequency $f_s$ that satisfies the formula (5), it is possible to obtain a result equivalent to that in a case of performing sampling of the four points in 90 degree intervals ($\pi/2$ interval) in a cycle of a carrier wave.

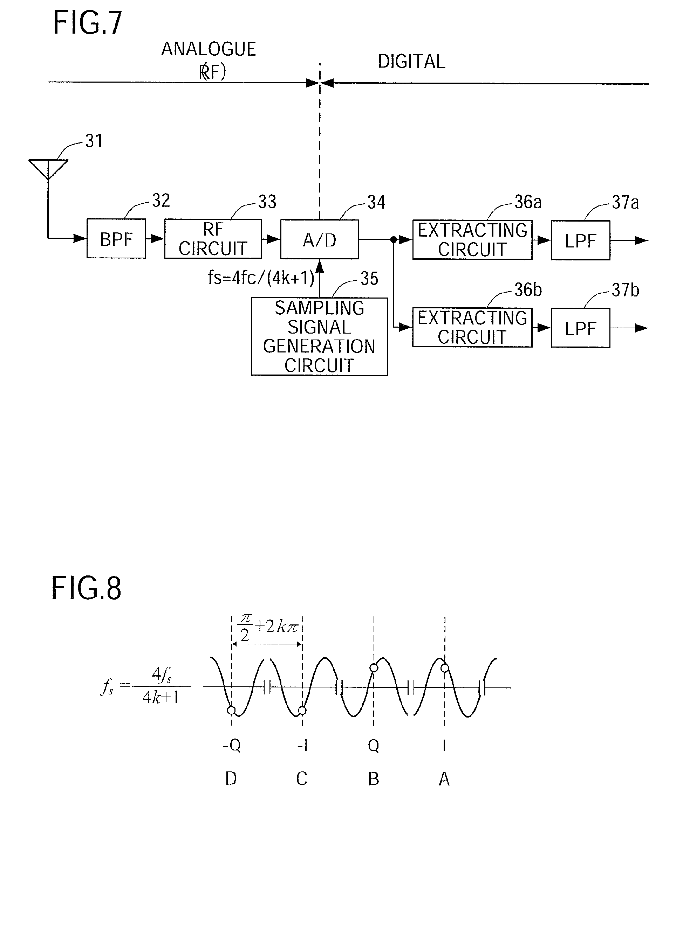

FIG. 7 shows an embodiment of the present invention that is applied to a receiving unit using QPSK.

In FIG. 7, a received signal of an antenna 31 is transmitted to an RF circuit 33 via a system filter (BPF: Band-Pass Filter) 32. A desired carrier wave signal is selected at the RF circuit 33 and a received signal of a desired carrier wave is outputted in the QPSK modulation system from the RF circuit 33. This received signal is transmitted to an A/D converter 34. A sampling signal that satisfies the relationship of formula (5) is supplied to the A/D converter 34 from a sampling signal generation circuit 35. The A/D converter 34 samples a carrier wave at a sampling frequency that satisfies the relationship of the formula (5).

The output signal of the A/D converter 34 is transmitted to extracting circuits 36a and 36b. Sample data is extracted for each sample at the extracting circuits 36a and 36b alternately.

As described above, upon sampling a received signal at a sampling frequency that satisfies the formula (5), it is possible to obtain a result equivalent to that in a case of sampling a carrier wave with a 90 degree interval. Therefore, as shown in FIG. 8, for each sample, data I, Q, -I, -Q... is outputted from the A/D converter 34.

In FIG. 7, by extracting sample data for each sample at the extracting circuit 36a and 36b alternately, I-channel data (I, -I, I, -I...) is outputted from the extracting circuit 36a and Q-channel data (Q, -Q, Q, -Q...) is outputted from the extracting circuit 36b.

The output signal of the extracting circuits 36a and 36b are outputted via low-pass filters (LPF) 37a and 37b. The I-channel data and the Q-channel data can be obtained from the outputted signals of these low-pass filters (LPF) 37a and 37b.

Thus, as long as a sampling frequency is set so as to satisfy the relationship of formula (5), it is possible to obtain a result equivalent to that in a case of sampling a carrier wave with a 90 degree interval. For example, provided that k is 50, sampling can be performed at a frequency of 4/201 the carrier wave frequency $f_c$. This means that the sampling frequency $f_s$ can be made approximately 1/50 the carrier wave frequency $f_c$.

However, it should be noted here that, provided that k is 50, the sampling frequency $f_s$ must be exactly 4/201 the carrier wave frequency $f_c$ and frequency error of $f_s$ directly leads to an error rate in reproduced data. Therefore, it is necessary to prepare a frequency control circuit that constantly minimizes frequency error at a receiving side.

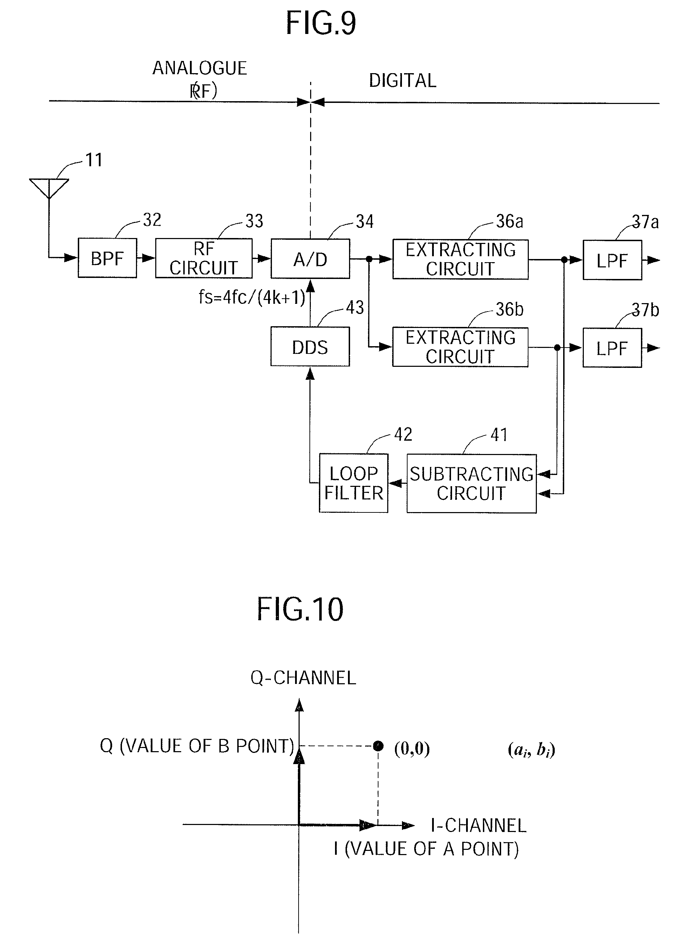

FIG. 9 shows a configuration in which, in addition to FIG. 7, a loop filter 42 and a subtracting circuit 41 that outputs a difference of an output level between the extracting circuits 36a and 36b are provided and a direct digital synthesizer 43 as a sampling signal generation circuit 35 is provided so that a sampling frequency and a sampling phase is adjusted simultaneously.

In the QPSK demodulation circuit, values of point A and point B among the four sampling points are extracted and outputted as data of the I-channel and the Q-channel, respectively. In the same way in undersampling, point A and point B when the data is (0,0) become special points that can be obtained such that the data of the I-channel becomes separated from the data of the Q-channel.

Incidentally, in view of a phase position of a waveform of a carrier wave regarding point A and point B, point B is located at a position at which the amplitude of a carrier wave moves from zero to 45 degrees in a positive direction and point A is located at a position of 135 degrees, which are special positions. It is important how a sampling point precisely coincides with this phase position.

As described above, the data (0,0) is located at a position at 45 degrees in a phase of the first quadrant on a phase plane of a signal, and amplitude of the I-channel and the Q-channel must be positive and the same value as each other, as shown in FIG. 10.

Therefore, in the present embodiment, it is configured such that the subtraction circuit 41 outputs a difference between the output signals of the extracting circuits 36a and 36b, i.e. a difference between the values of the I-channel and the Q-channel, the direct digital synthesizer 43 adjusts an output frequency of the direct digital synthesizer 43 so that the difference becomes zero, thereby converging a sampling signal to a targeted frequency and phase.

It should be noted that the received data (0,0) is required for performing such control. In an actual system, it is considered that a signal of the data (0,0) by an amount of time that is required for adjustment can be added to an initial preamble portion of a received data. In this preamble interval, an adjustment of a sampling frequency and a sampling phase is performed, and then a data main body is received.

It should be noted that, in the configuration in FIG. 9, although an example in which the direct digital synthesizer (DDS) 43 is used as a voltage control oscillator is shown, an analogue VCO (Voltage Controlled Oscillator) may be used.

As described above, it is understood that it is possible to perform undersampling of a carrier wave while holding vector information as long as a sample frequency is set so that a phase relationship of a sampling point of a signal generated as an alias coincides with a phase relationship of a sampling point of a carrier wave. In addition, it is understood that it is possible to obtain a result equivalent to that in a case of sampling a carrier wave with a 90 degree interval as long as the carrier wave is sampled with the relationship shown in the formula (5) and it is possible to directly perform QPSK demodulation as long as the data is extracted for each sample alternately.

To verify the forgoing, an experiment was conducted by manufacturing a circuit to which the frequency-phase adjusting circuit shown in FIG. 9 was added using FPGA (Field Programmable Gate Array). The methods of the experiment are shown in Table 1.

Table.1

| Modulation system | Carrier wave frequency | Signal rate | Sampling frequency |
|---|---|---|---|
| QPSK | 1[MHz] | 1[kHz] | $f_s = \dfrac{4f_c}{4k+1} \quad (k = 50)$ |

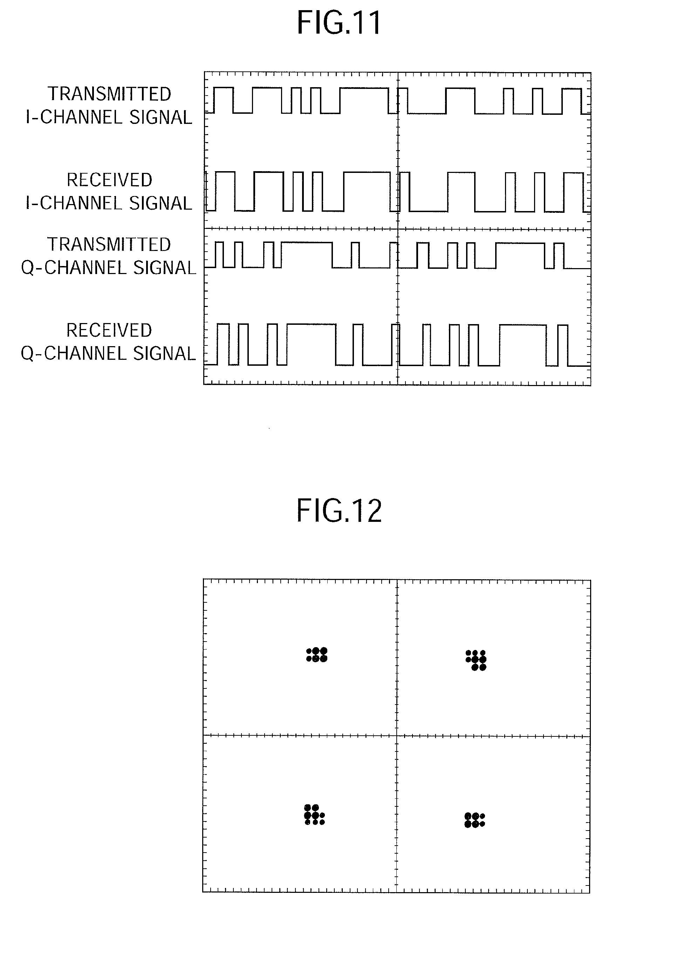

FIG. 11 is an actual measurement waveform of an input/output signal of a demonstration circuit using FPGA. For both the I-channel and the Q-channel, the received outputs that coincide with the transmitted signals are obtained, which verifies the effectiveness of the present invention.

FIG. 12 shows an actual measurement constellation of an output signal of a demonstration circuit. It is understood that a phase position of the signal is located 45 degrees in the first quadrant and the frequency-phase adjusting circuit is normally functioning.

Although embodiments of the present invention have been described above in detail, the present invention is not limited to the abovementioned embodiments and various modifications and applications can be made without departing the summary of the present invention. For example, although a wireless device is described in the examples of the present invention, in wired ADSL and the like, a carrier wave is modulated using QAM. Therefore, it can be demodulated using an identical principle to the present patent application. In addition, it is predicted that, in future optical communication, QAM will be used, which can be also demodulated using an identical principle to the present patent application.

<Circuit that captures frequency of modulated carrier wave>

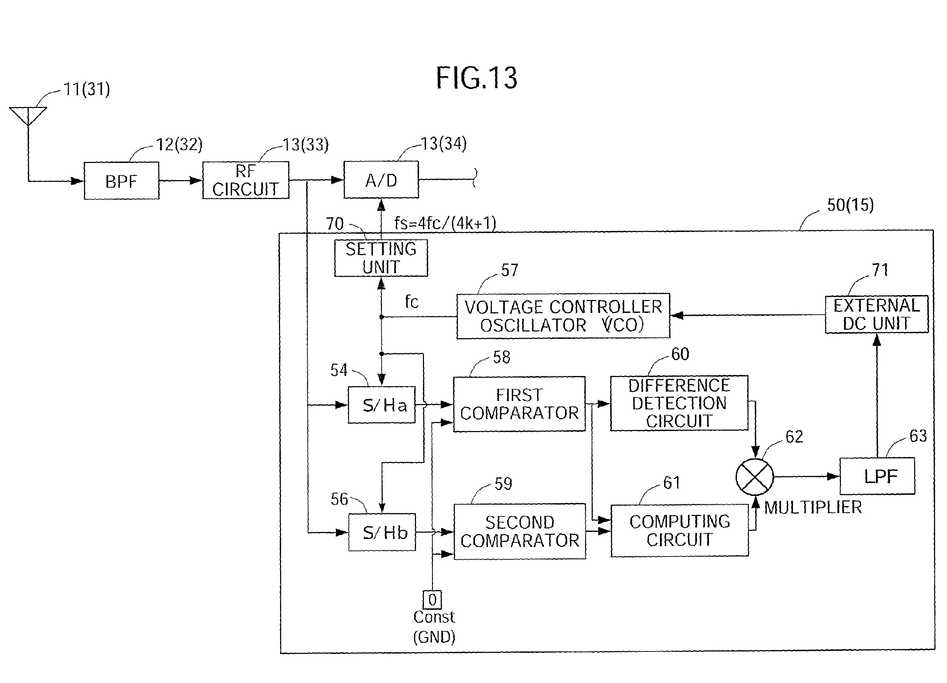

Next, details of a circuit that captures a frequency of a modulated carrier wave are described below. As shown in FIG. 13, a receiving device (a signal processing device) is a device that performs sampling of a modulated carrier wave S1 at a sampling frequency lower than a frequency of the carrier wave S1 and performs signal processing for converting from an analogue signal to a digital signal, where the receiving device includes: a voltage controlled oscillator (VCO) 57 (a local oscillation means) that outputs a local oscillation signal S2 having a predetermined frequency; a setting unit 70 (a setting means) that sets a sampling frequency $f_s$ so that a relationship between a frequency $f_c$ of the local oscillation signal S2 and the sampling frequency $f_s$ satisfies $f_s = 4f_c/(4k+1)$, in which k is a positive integer; a S/Ha 54 (a first sampling means) that samples the modulated carrier wave S1 by the local oscillation signal S2 (hereinafter, referred to as a comparison signal S2); a first comparator 58 (a first comparison means) that compares a signal obtained by the S/Ha 54 (the first sampling means) with a constant signal; a S/Hb 56 (a second sampling means) that samples a signal having a phase difference θ (0<θ<π) with respect to the modulated carrier wave S1 by the comparison signal S2; a second comparator 59 (a second comparison means) that compares a signal obtained by the S/Hb 56 (the second sampling means) with a constant signal; a computing circuit 61 (a first computing means) that computes whether a frequency of the modulated carrier wave S1 is higher or lower than a frequency of the comparison signal S2 based on a signal $V_1(t)$ obtained by the first comparator 58 (the first comparison means) and a signal $V_2(t)$ obtained by the second comparator 59 (the second comparison means); a difference detection circuit 60 (a second computing means) that computes a difference between a frequency of the modulated carrier wave S1 and a frequency of the comparison signal S2 based on the signal $V_1$; a multiplier 62 (a multiplication means) that multiplies a signal $V_3(t)$ obtained by the computing circuit 61 (the first computing means) by a signal $V_4(t)$ obtained by a difference detection circuit 60 (the second computing means); an LPF 63 (a frequency passing means) that allows a predetermined band frequency of a signal $V_5(t)$ obtained by the multiplier 62 (the multiplication means) to pass therethrough; and an external DC unit 71 (a DC voltage generating means) that supplies a DC voltage based on a signal $V_6(t)$ that is passed by the LPF 63 (the frequency passing means) to the voltage controlled oscillator (VCO) 57 (the local oscillation means). With such a configuration, the DC voltage generating means outputs a DC voltage based on the signal $V_6(t)$ that is passed by the frequency passing means to the voltage controlled oscillator (VCO) 57 (the local oscillation means).

In addition, a sampling frequency comparator 50 (described later) includes: a S/Ha 54; a S/Hb 56; a voltage controlled oscillator (VCO) 57; a first comparator 58; a second comparator 59; a difference detection circuit 60; a computing circuit 61; a multiplier 62; an LPF 63; a setting unit 70; and an external DC unit 71.

Therefore, the voltage controlled oscillator (VCO) 57 (the local oscillation means) can output to the setting unit 70 the frequency $f_c$ of the local oscillation signal S2 (comparison signal s2) that is modulated corresponding to an amplitude of the DC voltage supplied from the external DC unit 71 (the DC voltage generating means).

In this way, according to the present invention, in a wideband frequency, the oscillation frequency (the comparison signal S2) of the voltage controlled oscillator (VCO) 57 can be drew precisely to the proximity of an RF input signal (a compared signal S1). Accordingly, an analogue high frequency signal inputted from an antenna can be converted to a digital signal precisely using a sampling frequency lower than a frequency of the high frequency signal.

<First configuration of sampling frequency comparator 50>

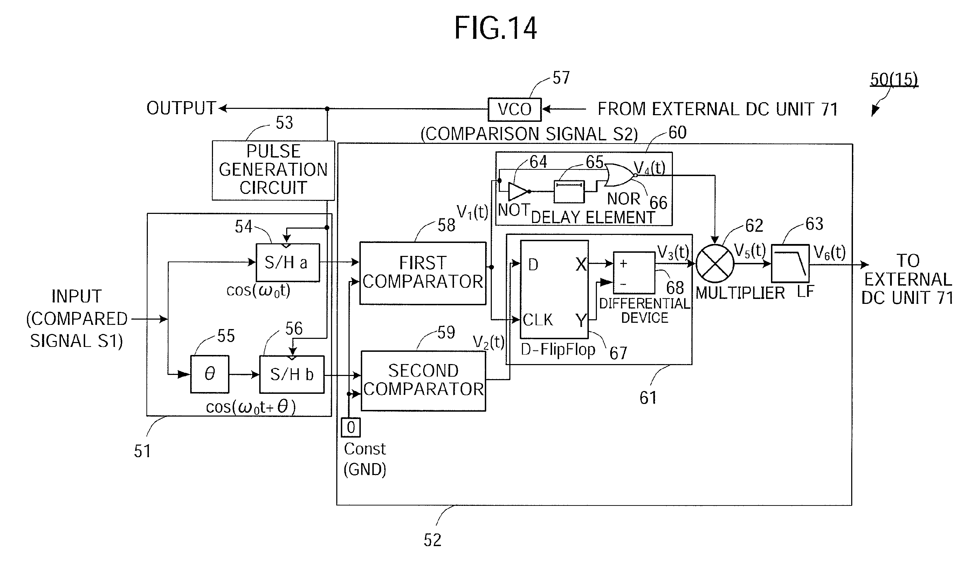

Furthermore, a circuit that adjusts a frequency of a modulated carrier wave according to the present invention may be used other than the receiving device as described above. Here, a first configuration of a sampling frequency comparator 50 (an analogue output type) is described in detail with reference to FIG. 14. As shown in FIG. 14, the sampling frequency comparator 50 is basically composed of an S/H portion 51, which performs sample and hold, and a frequency comparator 52 that performs comparison of frequencies. In addition, the S/H portion 51 includes: an S/Ha 54 that synchronizes a pulse signal supplied from a pulse generation circuit 53 with respect to an input signal ($f_{RF}$ = cos ($\omega_0$t))(hereinafter, referred to as a compared signal S1) and performs sample and hold; a delay portion that generates a predetermined phase difference θ with respect to the compared signal S1; and an S/Hb 56 that synchronizes a pulse signal supplied from the pulse generation circuit 53 with respect to an output signal (cos($\omega_0$t+θ)) from the delay portion 55, and performs sample and hold. Furthermore, the pulse generation circuit 53 converts an output signal (hereinafter, referred to as a comparison signal S2) from the voltage controlled oscillator (VCO) 57 to a pulse signal, and outputs the modulated pulse signal to the S/Ha 54 and the S/Hb 56. Additionally, the voltage controlled oscillator (VCO) 57 outputs the comparison signal S2 having a predetermined cycle to the pulse generation circuit 53 based on a DC voltage supplied from an external DC unit 71. In addition, in a case in which a low DC voltage is supplied from the external DC unit 71, the voltage controlled oscillator (VCO) 57 oscillates the comparison signal S2 as a low frequency signal, and in a case in which a high DC voltage is supplied from the external DC unit 71, the voltage controlled oscillator oscillates the comparison signal S2 as a high frequency signal.

That is, the S/H portion 51 samples the input signal ($f_{RF}$ = cos($\omega_0$t)) and a signal having the phase difference θ (0<θ<π) with respect to the input signal (cos($\omega_0$t)) at the S/Ha 54 and S/Hb 56, respectively.

Furthermore, the frequency comparator 52 includes: a first comparator 58 that compares a signal outputted from the S/Ha 54 with a signal of GND level (0); a second comparator 59 that compares a signal outputted from the S/Hb 56 with a signal of GND level (0); a difference detection circuit 60 that detects a difference between a compared signal S1 and a comparison signal S2 based on an output signal $V_1$(t) of the first comparator 58; a computing circuit 61 that computes whether the compared signal S1 is larger or smaller than the comparison signal S2 based on the output signal $V_1$(t) of the first comparator 58 and an output signal $V_2$(t) of the second comparator 59; a multiplier 62 that multiplies an output signal $V_4$(t) from the difference detection circuit 60 by an output signal $V_3$(t) from the computing circuit 61; and an LPF 63 that filters an output signal $V_5$(t) of the multiplier 62.

Furthermore, the difference detection circuit 60 includes an NOT circuit 64, a delay element 65, and an NOR circuit 66. The NOR circuit 66 generates $V_4$(t) based on an output signal of the first comparator 58 via the NOT circuit 64 and the delay element 65 and the output signal $V_1$(t) outputted directly from the first comparator 58.

In addition, the computing circuit 61 includes a DFF (Delay Flip Flop) portion 67 and a differential device 68.

Here, $V_1$(t) and $V_2$(t) are rectangular wave signals and a frequency $\Delta f$ is represented using an RF input signal frequency $f_{RF}$ (a compared signal S1) and an oscillation frequency $f_{VCO}$ (a comparison signal S2) of a voltage controlled oscillator (VCO) 57 as follows.

$$\Delta f = f_{RF} - f_{VCO} \quad (6)$$

This is a frequency at which output signals of the S/Ha 54 and the S/Hb 56 intersect 0 (GND). Furthermore, the $V_2$(t) is a rectangular wave of which phase progresses or delays with respect to the $V_1$(t) by $2\pi\Delta f N T_{VCO}$.

<Operation of DFF portion 67>

Furthermore, an operation of a DFF portion 67 is described. The DFF portion 67 is a circuit that stores a value of a D terminal on the rising edge or falling edge of the clock signal inputted to a CLK terminal, and stores and holds a value X, which is the same as the value D, and a value Y, which is inverted, until a subsequent clock pulse comes. It should be noted that, in the present embodiment, the value of the D terminal is stored on the rising edge.

<Case in which frequency of compared signal S1 is higher than frequency of comparison signal S2 (S1>S2)>

Here, a case in which a frequency of a compared signal S1 is higher than a frequency of a comparison signal S2 is described. In a case in which the compared signal S1 (the RF input signal frequency $f_{RF}$) is higher than the comparison signal S2 (the oscillation frequency $f_{VCO}$) of the voltage controlled oscillator (VCO) 57, the $\Delta f$ of the formula (6) becomes positive, which means that a phase of the $V_2(t)$ progresses with respect to the $V_1(t)$ by $2\pi\Delta f N T_{VCO}$. Therefore, it is $V_2(t) = 1$ upon the rising of the $V_1(t)$. When the $V_1(t)$ is put into the DFF portion 67 and the $V_2(t)$ is put into the D terminal, an output X of the DFF portion 67 becomes "1" and an inverted output Y thereof becomes "0". When this is input to the differential device 68, the $V_3(t)$ is outputted as a positive value.

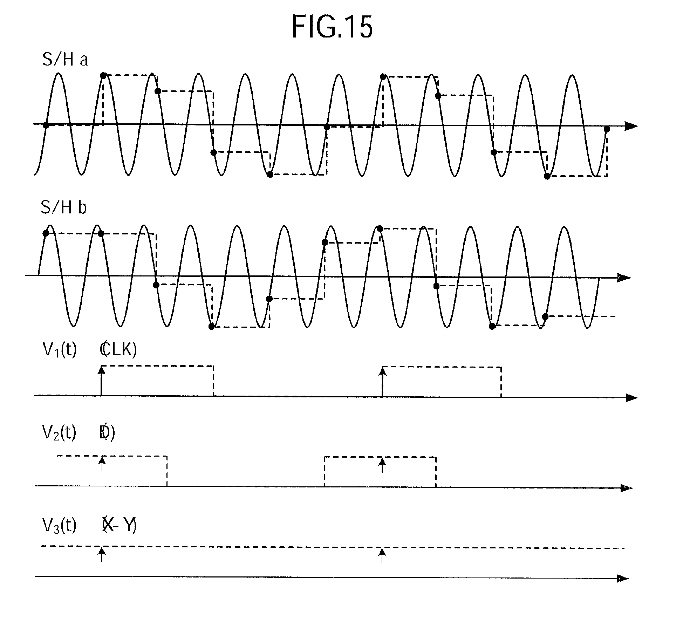

FIG. 15 shows a relationship between output signals $V_1(t)$ and $V_2(t)$ of the S/Ha 54 and the S/Hb 56, and an output signal $V_3(t)$ of the DFF portion 67 in a case in which a frequency of a compared signal S1 is higher than a frequency of a comparison signal S2.

<Case in which frequency of compared signal S1 is lower than frequency of comparison signal S2 (S1<S2)>

Next, a case in which a frequency of a compared signal S1 is lower than a frequency of a comparison signal S2 is described. In a case in which the compared signal S1 (the RF input signal frequency $f_{RF}$) is lower than the comparison signal S2 (the oscillation frequency $f_{VCO}$) of the voltage controlled oscillator (VCO) 57, the $\Delta f$ of the formula (6) becomes negative. At this time, a phase of $V_2(t)$ is delayed with respect to $V_1(t)$ by $2\pi\Delta f N T_{VCO}$. Therefore, upon the rising of the $V_1(t)$, since a phase of the $V_1(T)$ progresses more than that of the $V_2(t)$, it is $V_2(t) = 0$. When the $V_1(t)$ is put into the CLK terminal of the DFF portion 67 and the $V_2(t)$ is put into the D terminal, an output X of the DFF portion 67 becomes "0" and an inverted output Y thereof becomes "1". When this is input to the differential device 68, the $V_3(t)$ is outputted as a negative value.

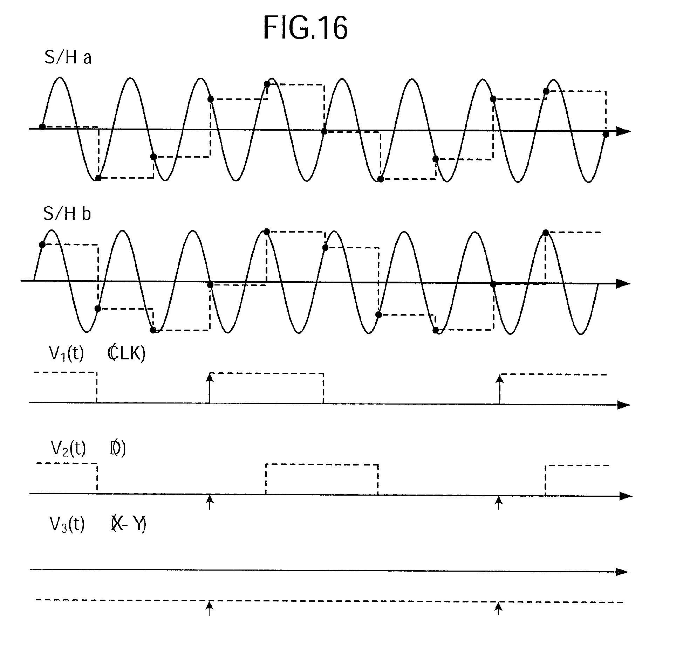

FIG. 16 shows a relationship between output signals $V_1(t)$ and $V_2(t)$ of the S/Ha 54 and the S/Hb 56, and an output signal $V_3(t)$ of the DFF portion 67 in a case in which a frequency of a compared signal S1 is lower than a frequency of a comparison signal S2.

<Relationship between frequency difference and number of pulses>

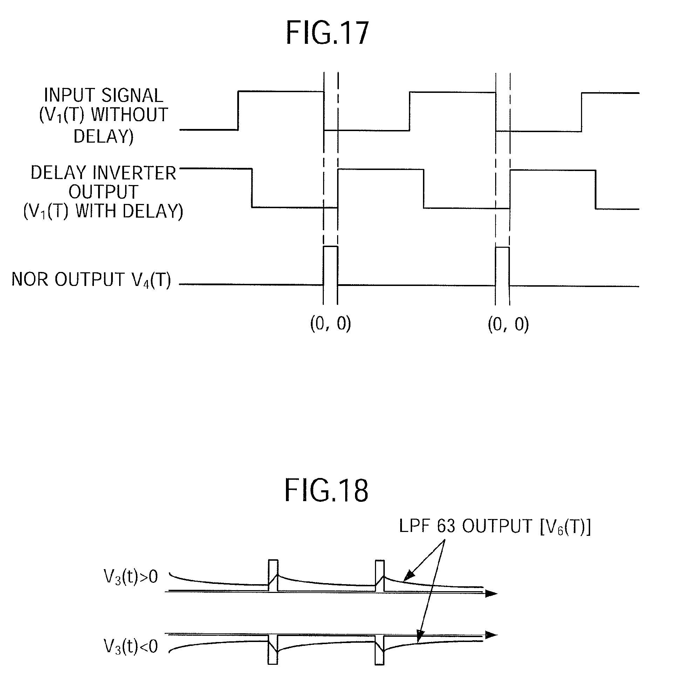

Next, a relationship between a frequency difference and a number of pulses is described. When the $V_1(t)$ becomes from "1" to "0", a $V_4(t)$ outputted from the NOR circuit 66 is inputted with a delay to the NOT circuit 64 by the delay element 65, and a pulse signal is generated only when ($V_1(t)$ without delay, $V_1(t)$ with delay) = (0,0) is inputted to the NOR circuit 66. A pulse width outputted is determined based on an amount of delay by the delay element 65. Therefore, the $V_4(t)$ outputs a number of pulses proportional to $\Delta f = f_{RF}\text{-}f_{VCO}$ (see FIG. 17).

Furthermore, the multiplier 62 generates $V_5(t)$ by multiplying the $V_3(t)$ by the $V_4(t)$. In addition, since the LPF 63 is a low pass filter, it integrates the $V_5(t)$ and generates $V_6(t)$. Here, the $V_5(t)$ and the $V_4(t)$ are represented as follows.

$$V_5(t) = V_3(t) * V_4(t) \qquad (7)$$

$$V_6(t) = \int V_3(t) * V_4(t)\, dt \qquad (8)$$

As shown in FIG. 18, whether this $V_6(t)$ is a positive voltage or a negative voltage is switched depending on the magnitude relationship between $f_{VCO}$ and $f_{RF}$. In a case of $f_{RF}>f_{VCO}$, it becomes a positive voltage, and in a case of $f_{RF}<f_{VCO}$, it becomes a negative voltage.

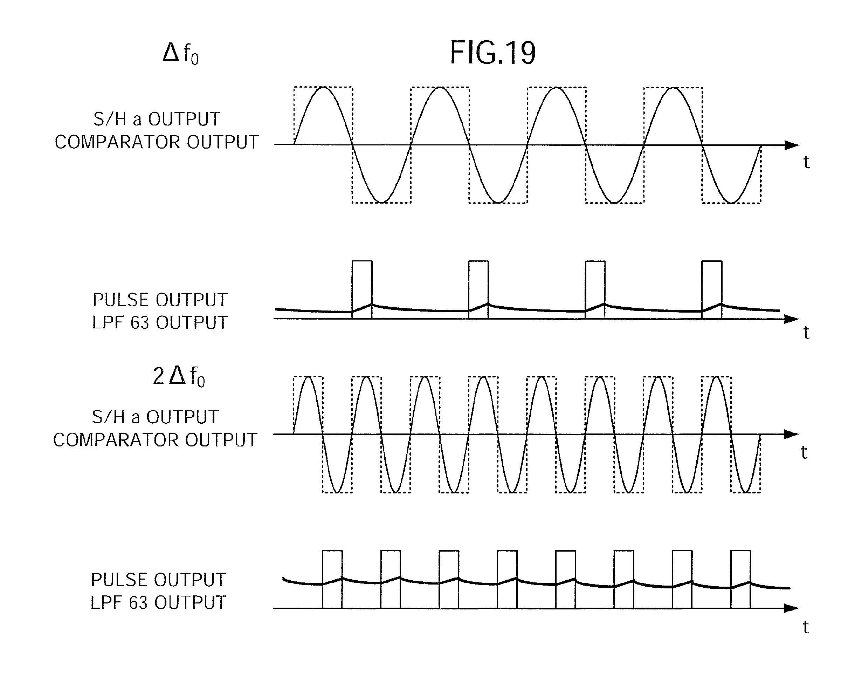

In addition, since a pulse width is determined based on only an amount of delay by the delay element 65, a pulse with an identical width is constantly outputted. According to FIG. 17, a pulse is generated when an output of a first comparator 58 is changed from positive to negative. Here, provided that $V_3(t)>0$, when a frequency difference $\Delta f_0$ becomes $2\Delta f_0$, the number of pulses becomes double, and thus an output such as that shown in FIG. 19 can be obtained (however, strictly speaking, since the output signal of the S/Ha 54 is discrete, it does not become a continuous sine wave such as that shown in FIG. 19).

Then, the output signal $V_6(t)$ of the LPF 63 is outputted to the external DC unit 71. The external DC unit 71 outputs a DC voltage corresponding to the output signal $V_6(t)$ supplied from the LPF 63 to the voltage controlled oscillator (VCO) 57. The voltage controlled oscillator (VCO) 57 outputs a frequency signal $f_{VCO}$ corresponding to the DC voltage supplied from the external DC unit 71.

In this way, according to the present invention, since the comparison signal S2 is outputted as an output proportional to $\Delta f = f_{RF}-f_{VCO}$ from the voltage controlled oscillator (VCO) 57, the oscillation frequency (the comparison signal S2) of the voltage controlled oscillator (VCO) 57 can be drew to the proximity of an RF input signal (a compared signal S1).

Therefore, since the sampling frequency comparator 50 according to the present invention satisfies a function to synchronize frequency, it can be broadly applied to wireless communication instrument, especially, synchronized detection.

<Second configuration of sampling frequency comparator 50>

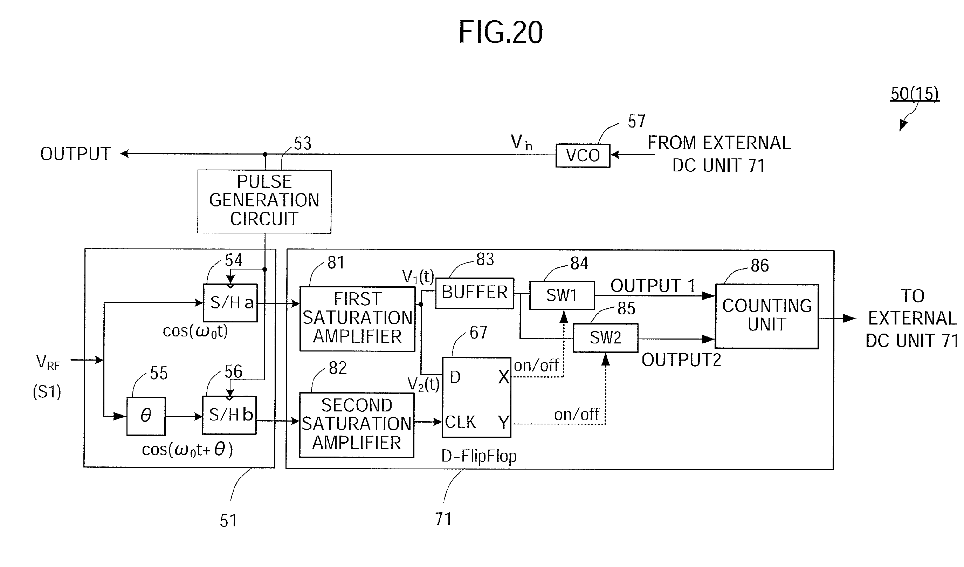

Next, a second configuration of the sampling frequency comparator 50 (a digital output type) is described in detail with reference to FIG. 20. It should be noted that identical components with the abovementioned first configuration are assigned identical numerals. As shown in FIG. 20, the sampling frequency comparator 50 is basically composed of an S/H portion 51 that performs sample and hold, and a frequency comparator 80 that performs comparison of frequencies.

The frequency comparator 80 includes: a first saturation amplifier 81 (a first amplification means) that saturates a signal outputted from an S/Ha 54; a second saturation amplifier 82 (a second amplification means) that saturates a signal outputted from an S/Hb 56; a DFF portion 67 (a computing means); a buffer 83 (a holding means) that buffers an output signal $V_2(t)$ of the first saturation amplifier 81; and a first switching portion 84 (a first switching means) and a second switching portion 85 (a second switching means) that output the output signals from the buffer 83 based on an ON signal or an OFF signal supplied from the DFF portion 67.

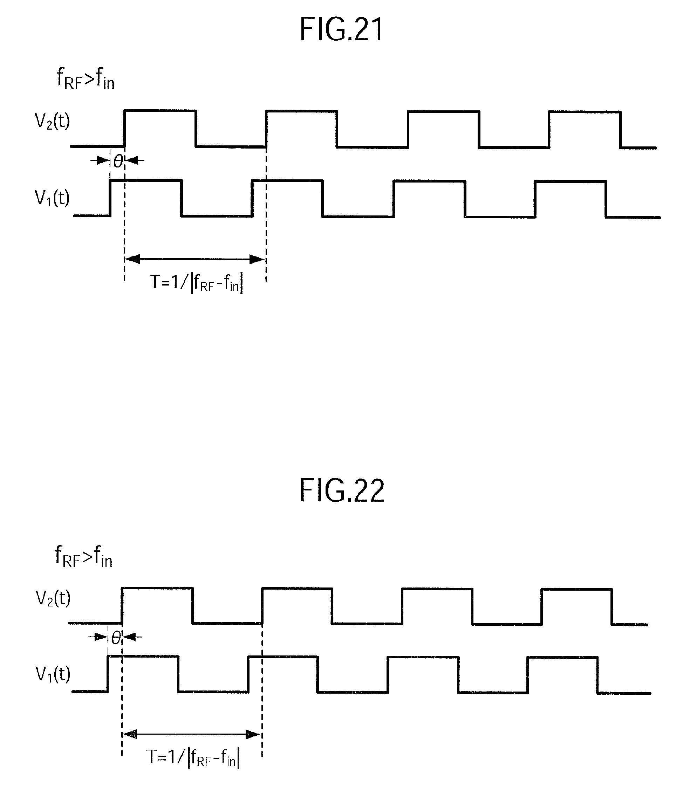

Here, an input signal $V_{RF}$ is input to the S/Hb 56 in a state in which a phase is delayed $\theta$ by the delay portion 55. Furthermore, the S/Ha 54 and the S/Hb 56 are sampled by a pulse that is synchronized with a $V_{in}$, a beat signal having a frequency of $|f_{RF}-f_{in}|$, which is a difference between a frequency $f_{RF}$ of an input signal $V_{RF}$ and a frequency $f_{in}$ of $V_{in}$, is outputted. Waveform shaping is performed to these output signals by the first saturation amplifier 81 and the second saturation amplifier 82, and rectangular waves $V_1(t)$ and $V_2(t)$ can be obtained. Furthermore, a relationship of progression/delay of a phase between the $V_1(t)$ and the $V_2(t)$ as shown in FIGS. 21 and 22 is changed depending on an amplitude of the frequency. Here, FIG. 21 shows a relationship of the $V_1(t)$ and the $V_2(t)$ in a case of $f_{RF}>f_{in}$, and FIG. 22 shows a relationship of the $V_1(t)$ and the $V_2(t)$ in a case of $f_{RF}<f_{in}$.

Using such characteristics, when the $V_1(t)$ and the $V_2(t)$ is inputted to the D terminal of the DFF portion 67 and the CLK terminal, an output of the DFF portion 67 is switched to Hi/Low depending on an amplitude relationship between the frequency $f_{RF}$ of the $V_{RF}$ and the frequency $f_{in}$ of the $V_{in}$. In addition, when the output signal $V_2(t)$ of the first saturation amplifier 81 is inputted as an input signal via the buffer 83 and an ON signal is inputted from the DFF portion 67, the first switch portion 84 outputs the signal $V_2(t)$, and furthermore, when an OFF signal is inputted from the DFF portion 67, the signal $V_2(t)$ is not outputted. Moreover, when the output signal $V_2(t)$ of the first saturation amplifier 81 is inputted as an input signal via the buffer 83 and an ON signal is inputted from the DFF portion 67, the second switch portion 85 outputs the signal $V_2(t)$, and furthermore, when an OFF signal is inputted from the DFF portion 67, the signal $V_2(t)$ is not outputted.

Here, in a case of $f_{RF}>f_{in}$, the ON signal is inputted from the DFF portion 67 to the first switch portion 84 and the OFF signal is inputted from the DFF portion 67 to the second switch portion 85. Furthermore, in a case of $f_{RF}<f_{in}$, the OFF signal is inputted from the DFF portion 67 to the first switch portion 84 and the ON signal is inputted from the DFF portion 67 to the second switch portion 85.

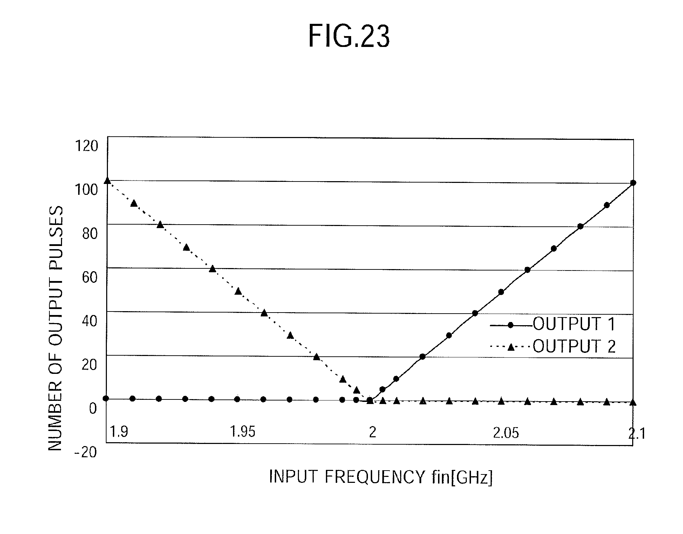

In this way, by counting the number of pulses outputted from the first switch portion 84 and the second switch portion 85 at a counting unit 86, it is possible to obtain a frequency comparison signal (the signal $V_{RF}$) as a digital signal. Here, a relationship of a number of output pulses with respect to an input frequency $f_{in}$ in a case in which $V_{RF}$ is 2.0 GHz is shown in FIG. 23.

In addition, as is understood from FIG. 23, when an input frequency $f_{in}$ is smaller than a signal $V_{RF}$, there is no output from the first switch portion 84 and a pulse signal is outputted from the second switch portion 85 (as it approaches 2.0 GHz, the number of output pulses decreases). Therefore, the external DC portion 71 inputs a high DC voltage to the voltage controlled oscillator (VCO) 57. Furthermore, when an input frequency $f_{in}$ is larger than a signal $V_{RF}$, there is no output from the second switch portion 85 and a pulse signal is outputted from the first switch portion 84 (as it becomes greater than 2.0 GHz, the number of output pulses increases). Therefore, the external DC portion 71 inputs a low DC voltage to the voltage controlled oscillator (VCO) 57. With such a configuration, the oscillation frequency of the voltage controlled oscillator (VCO) 57 can be drawn to the proximity of the signal $V_{RF}$.

Therefore, since the sampling frequency comparator 50 according to the present invention satisfies the function to synchronize frequency, it can be broadly applied to wireless communication instruments.

Here, advantages of the first and second configurations of the abovementioned sampling frequency comparator 50 are listed below.

1. Comparing a frequency of an RF signal (a compared signal S1) directly.

2. Extracting a signal of a frequency difference $|f_{RF}-f_{in}|$ by sampling an input signal $V_{RF}$ by $V_{in}$.

3. By shifting a phase of an input signal $V_{RF}$ by $\theta$, allowing input signals $V_1(t)$ and $V_2(t)$ with a frequency difference $|f_{RF}-f_{in}|$ to have a phase difference $\theta$ as well.

4. Progression and delay of a phase of the output signals $V_1(t)$ and $V_2(t)$ is switched depending on an amplitude relationship between the $V_{RF}$ and the $V_{in}$.

5. Determining an magnitude of frequency by making the output signals $V_1(t)$ and $V_2(t)$ input signals to the DFF portion 67.

6. Outputting a frequency difference signal from an analogue signal to a digital signal.

<Configuration of S/H portion 51>

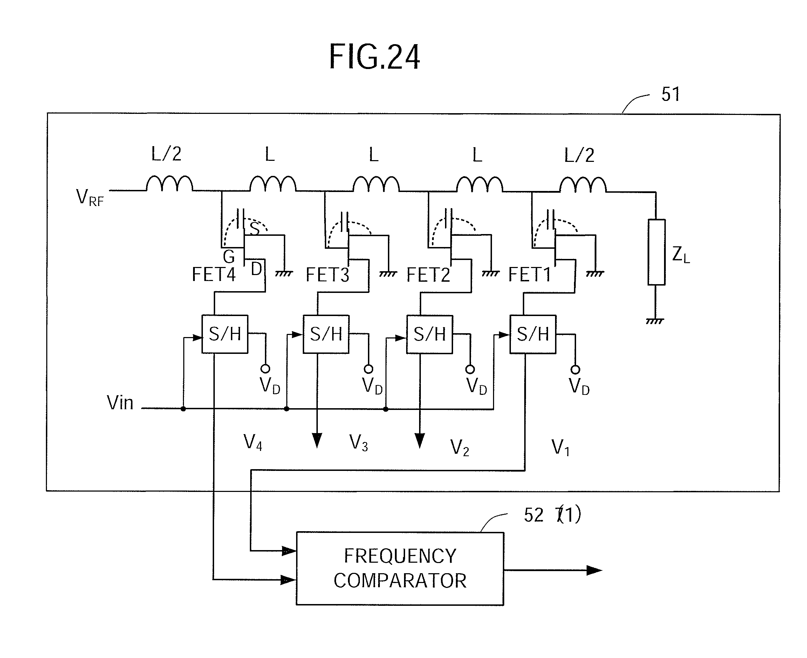

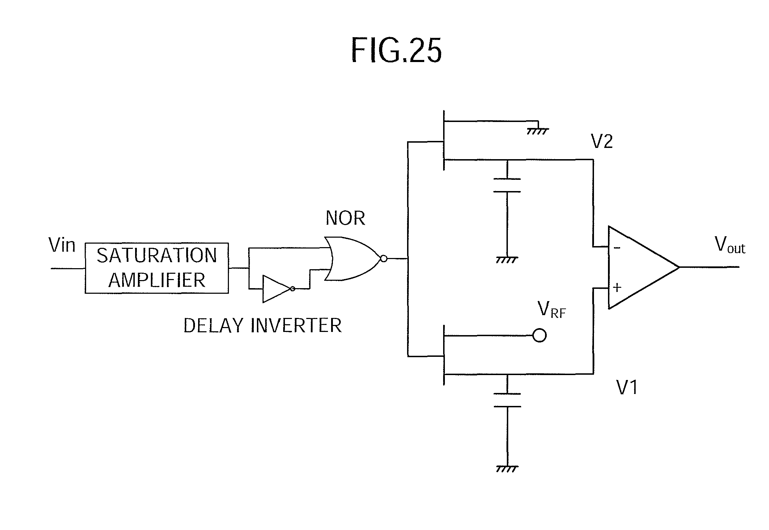

Here, a configuration of an S/H 51 is described in detail with reference to FIGS. 24 and 25. It should be noted that FIG. 24 is a circuit diagram showing a traveling-wave-type sample and hold circuit.

In each FET shown in FIG. 24, a configuration of a constant K type filter is made by way of a capacitance between gate-source (Cgs) and an inductor L, and it can be regarded as an artificial transmission line of L and C. In addition, since a signal $V_{RF}$ inputted is delayed by this artificial transmission line, the signal $V_{RF}$ is inputted in a constant phase interval to each of the sample and hold (S/H) circuits.

<RF sample and hold circuit>

In order to perform direct sampling to an RF (high frequency) band frequency, a sample and hold circuit that is operated at high speed should be used. It should be noted that the circuit shown in FIG. 25 is used as an RF sample and hold circuit. In addition, an FET is used as a switching element.

A narrow pulse synchronized with $V_{in}$ is generated in the previous stage and added to each gate terminal of the FET, and an RF signal inputted from a drain terminal is held by a capacitor on a source side. At this time, since a pulse is leaked from the gate to the source, a difference configuration can be used so that the influence is negated.

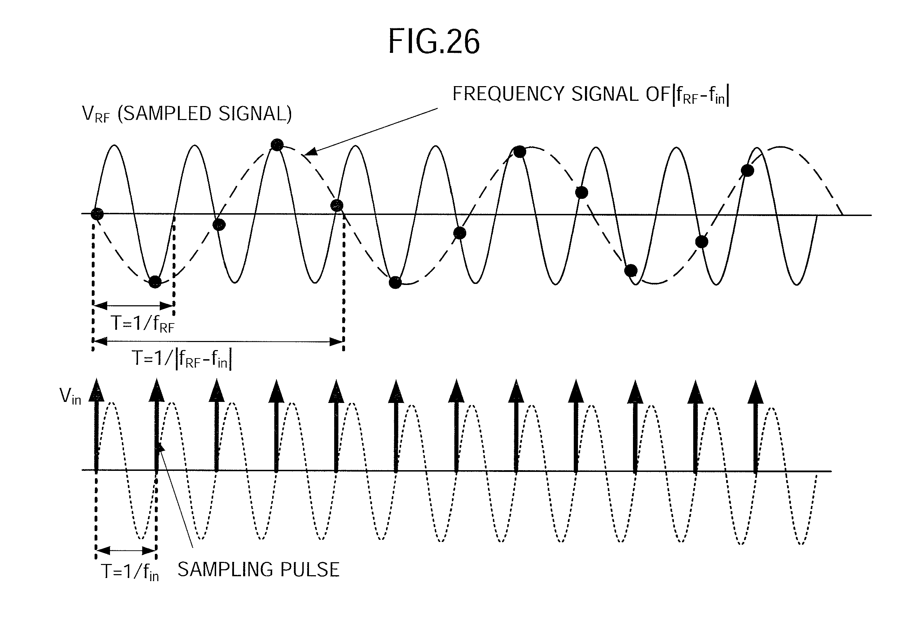

In addition, with a configuration including the abovementioned artificial transmission line and the RF sample and hold circuit, signals V1 to V4 outputted from each S/H circuit become a sampling output of a signal having a constant phase difference with respect to the $V_{RF}$. The output of the sample and hold circuit based on the relationship between the $V_{RF}$ and $V_{in}$ is shown in FIG. 26.

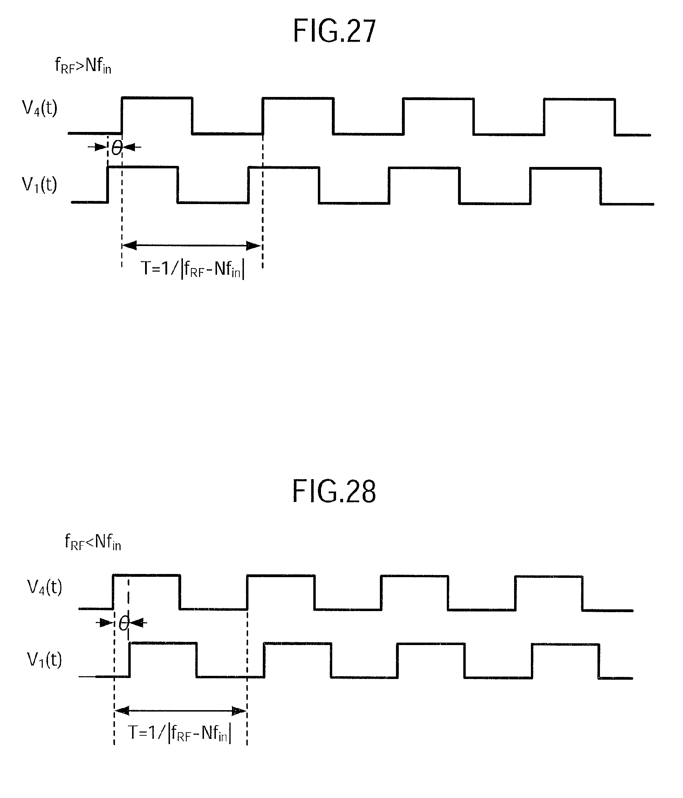

The output signals V1 to V4 of the sample and hold circuit become a signal having a frequency of $|f_{RF}-f_{in}|$, respectively. Next, as a result of the observation on how the relationship between $f_{in}$ and $f_{in}$ affects the V1 and V4, it is understood that, on the one hand, in a case in which the $f_{RN}$ is higher than an Nth sampling frequency $f_{in}$ (N is frequency dividing ratio), a phase of the $V_1(t)$ progresses by $\theta$ as compared with that of the V4(t) (see FIG. 27), and on the other hand, in a case in which the $f_{RN}$ is lower than the Nth sampling frequency $f_{in}$, a phase of the $V_1(t)$ is delayed by $\theta$ as compared with that of the V4(t) (see FIG. 28).

The first and second configurations of the sampling frequency comparator 50 according to the present invention as described above are proposed using such characteristics.

It should be noted that the abovementioned first configuration is of an analogue output type and the abovementioned second configuration is of a digital output type. The advantage of the first configuration includes infinite expansion in an amplitude direction and can draw the oscillation frequency (the comparison signal S2) of the voltage controlled oscillator (VCO) 57 precisely to the proximity of the RF input signal (the compared signal S1). In addition, the advantage of the second configuration is that it can be used in a nonadjustable state and the circuit size thereof can be reduced. Therefore, the first and second configurations can be selected appropriately depending on the intended application.

**Claims**

1. A signal processing method for sampling a carrier wave at a sampling frequency lower than a frequency of the carrier wave and converting from an analogue signal to a digital signal,
   wherein the method sets the sampling frequency so that a phase relationship of a sampling point of an alias signal generated by sampling the carrier wave at a sampling frequency lower than the frequency of the carrier wave coincides with a phase relationship of a sampling point of the carrier wave.

2. A signal processing method for sampling a carrier wave at a sampling frequency lower than a frequency of the carrier wave and converting from an analogue signal to a digital signal, wherein the method sets the sampling frequency so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$.

3. A signal processing method for sampling a modulated carrier wave S1 at a sampling frequency lower than a frequency of the modulated carrier wave S1 and converting from an analogue signal to a digital signal, the method comprising:

an outputting step of outputting a local oscillation signal S2 having a predetermined frequency from a local voltage controlled oscillator;
a setting step of setting the sampling frequency $f_s$ so that a relationship between a frequency $f_c$ of the local oscillation signal S2 and the sampling frequency $f_s$ satisfies $f_s = 4f_c/(4k+1)$, wherein k is a positive integer;
a first sampling step of sampling the modulated carrier wave S1 by the local oscillation signal S2;
a first comparison step of comparing a signal obtained in the first sampling step with a constant signal;
a second sampling step of sampling a signal having a phase difference $\theta$ ($0<\theta<\pi$) with respect to the modulated carrier wave S1 by the local oscillation signal S2;
a second comparison step of comparing a signal obtained in the second sampling step with the constant signal;
a first computing step of computing whether a frequency of the modulated carrier wave S1 is higher or lower than a frequency of the local oscillation signal S2 based on a signal $V_1(t)$ obtained in the first comparison step and a signal $V_2(t)$ obtained in the second comparison step;
a second computing step of computing a difference between a frequency of the modulated carrier wave S1 and a frequency of the local oscillation signal S2 based on the signal $V_1$;
a multiplication step of multiplying a signal $V_3(t)$ obtained in the first computing step with a signal $V_4(t)$ obtained in the second computing step; and
a DC voltage generating step of supplying a DC voltage to the local voltage controlled oscillator based on a signal $V_5(t)$ obtained in the multiplication step,
wherein the outputting step modulates a frequency $f_c$ of the local oscillation signal S2 according to the DC voltage.

4. A signal processing device that performs signal processing of sampling a carrier wave at a sampling frequency lower than a frequency of the carrier wave and converting from an analogue signal to a digital signal, the device comprising:

an A/D converting means (14) for converting the carrier wave from an analogue signal to a digital signal; and
a sampling signal generating means (15) for generating a sampling signal for sampling the carrier wave at a sampling frequency so that a phase relationship of a sampling point of an alias signal generated by sampling the carrier wave at a sampling frequency lower than the frequency of the carrier wave coincides with a phase relationship of a sampling point of the carrier wave.

5. A signal processing device that performs signal processing of sampling a carrier wave at a sampling frequency lower than a frequency of the carrier wave and converting from an analogue signal to a digital signal, the device comprising:

an A/D converting means (14) for converting the carrier wave from an analogue signal to a digital signal; and
a sampling signal generating means (15) for generating a sampling signal for sampling the carrier wave with a sampling

frequency so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$.

6. A signal processing device that performs signal processing of sampling a modulated carrier wave S1 at a sampling frequency lower than a frequency of the modulated carrier wave S1 and converting from an analogue signal to a digital signal, the device comprising:

a local oscillation means (57) for outputting a local oscillation signal S2 having a predetermined frequency;
a setting means (70) for setting a sampling frequency $f_s$ so that a relationship between a frequency $f_c$ of the local oscillation signal S2 and the sampling frequency $f_s$ satisfies $f_s = 4f_c/(4k+1)$, wherein k is a positive integer;

a first sampling means (54) for sampling the modulated carrier wave S1 by the local oscillation signal S2;

a first comparison means (58) for comparing a signal obtained by the first sampling means (54) with a constant signal;

a second sampling means (56) for sampling a signal having a phase difference $\theta$ ($0<\theta<\pi$) with respect to the modulated carrier wave S1 by the local oscillation signal S2;

a second comparison means (59) for comparing a signal obtained by the second sampling means (56) with the constant signal;

a first computing means (61) for computing whether a frequency of the modulated carrier wave S1 is higher or lower than a frequency of the local oscillation signal S2 based on a signal $V_1(t)$ obtained by the first comparison means (58) and a signal $V_2(t)$ obtained by the second comparison means (59) ;

a second computing means (60) for computing a difference between a frequency of the modulated carrier wave S1 and a frequency of the local oscillation signal S2 based on the signal $V_1$;

a multiplication means (62) for multiplying a signal $V_3(t)$ obtained by the first computing means (61) with a signal $V_4(t)$ obtained by the second computing means (60) ; and

a DC voltage generating means (71) for supplying a DC voltage to the local oscillation means (57) based on a signal $V_5(t)$ obtained by the multiplication means (62),

wherein the local oscillation means (57) modulates a frequency $f_c$ of the local oscillation signal S2 according to the DC voltage.

7. A wireless reception device that receives a carrier wave modulated by quadrature modulation, samples the carrier wave thus received, and performs conversion from an analogue signal to a digital signal, comprising:

an A/D converting means (14) for converting the carrier wave from an analogue signal to a digital signal;

a sampling signal generating means (15) for generating a sampling signal for sampling the carrier wave at a sampling frequency so that a phase relationship of a sampling point of an alias signal generated by sampling the carrier wave with a sampling frequency lower than the frequency of the carrier wave coincides with a phase relationship of a sampling point of the carrier wave; and

a demodulating means (36a, 36b) for demodulating data of an I-channel and data of a Q-channel from a signal sampled by the A/D converting means (14) .

8. A wireless reception device that receives a carrier wave S1 modulated by quadrature modulation, samples the modulated carrier wave S1, and performs conversion from an analogue signal to a digital signal, the device comprising:

an A/D converting means (14) for converting the modulated carrier wave S1 from an analogue signal to a digital signal;

a sampling signal generating means (15) for generating a sampling signal for sampling the modulated carrier wave S1 at a frequency $f_s$ of a sampling signal so that a phase relationship of a sampling point of an alias signal generated by sampling the modulated carrier wave S1 at a sampling frequency lower than the frequency of the modulated carrier wave S1 coincides with a phase relationship of a sampling point of the modulated carrier wave S1; and

a demodulating means (36a, 36b) for demodulating data of an I-channel and data of a Q-channel from a signal sampled by the A/D converting means(14),

wherein the sampling signal generating means (15) comprises:

a local oscillation means (57) for outputting a local oscillation signal S2 having a predetermined frequency;

a setting means (70) for setting the sampling frequency $f_s$ so that a relationship between a frequency $f_c$ of the local oscillation signal S2 and the frequency $f_s$ of the sampling signal satisfies $f_s = 4f_c/(4k+1)$, wherein k is a positive integer;

a first sampling means (54) for sampling the modulated carrier wave S1 by the local oscillation signal S2;

a first comparison means (58) for comparing a signal obtained by the first sampling means (54) with a constant signal;

a second sampling means (56) for sampling a signal having a phase difference $\theta$ ($0<\theta<\pi$) with respect to the modulated carrier wave S1 by the local oscillation signal S2;

a second comparison means (59) for comparing a signal obtained by the second sampling means (56) with the constant signal;

a first computing means (61) for computing whether a frequency of the modulated carrier wave S1 is higher or lower than a frequency of the local oscillation signal S2 based on a signal $V_1(t)$ obtained by the first comparison means (58) and a signal $V_2(t)$ obtained by the second comparison means (59) ;
a second computing means (60) for computing a difference between a frequency of the modulated carrier wave S1 and a frequency of the local oscillation signal S2 based on the signal $V_1$;
a multiplication means (62) for multiplying a signal $V_3(t)$ obtained by the first computing means (61) with a signal $V_4(t)$ obtained by the second computing means (60) ; and
a DC voltage generating means (71) for supplying a DC voltage to the local oscillation means (57) based on a signal $V_5(t)$ obtained by the multiplication means (62),
wherein the local oscillation means (57) modulates a frequency $f_c$ of the local oscillation signal S2 according to the DC voltage.

9. A communication reception device that receives a carrier wave modulated by quadrature modulation, samples the carrier wave thus received, and performs conversion from an analogue signal to a digital signal, the device comprising:

an A/D converting means (14) for converting the carrier wave from an analogue signal to a digital signal;
a sampling signal generating means (15) for generating a sampling signal for sampling the carrier wave at a sampling frequency so that, provided that $f_c$ is a carrier wave frequency, $f_s$ is a sampling frequency, and k is a positive integer, a relationship between the carrier wave frequency $f_c$ and the sampling frequency $f_s$ satisfies $f_s = 4f_c/(4k+1)$; and
a demodulating means (36a, 36b) for demodulating data of an I-channel and data of a Q-channel, which are two types of data orthogonal, from a signal sampled by the A/D converting means (14) .

10. A communication reception device that receives a carrier wave S1 modulated by quadrature modulation, samples the modulated carrier wave S1, and performs conversion from an analogue signal to a digital signal, the device comprising:

an A/D converting means (14) for converting the modulated carrier wave S1 from an analogue signal to a digital signal; and
a sampling signal generating means (15) for generating a sampling signal for sampling the modulated carrier wave S1 at a frequency $f_s$ of a sampling signal so that a phase relationship of a sampling point of an alias signal generated by sampling the modulated carrier wave S1 at a sampling frequency lower than the frequency of the modulated carrier wave S1 coincides with a phase relationship of a sampling point of the modulated carrier wave S1; and
a demodulating means (36a, 36b) for demodulating data of an I-channel and data of a Q-channel, which are two types of data orthogonal, from a signal sampled by the A/D converting means (14),
wherein the sampling signal generating means (15) comprises:

a local oscillation means (57) for outputting a local oscillation signal S2 having a predetermined frequency;
a setting means (70) for setting the sampling frequency $f_s$ so that a relationship between a frequency $f_c$ of the local oscillation signal S2 and the frequency $f_s$ of the sampling signal satisfies $f_s = 4f_c/(4k+1)$, wherein k is a positive integer;
a first sampling means (54) for sampling the modulated carrier wave S1 by the local oscillation signal S2;
a first comparison means (58) for comparing a signal obtained by the first sampling means (54) with a constant signal;
a second sampling means (56) for sampling a signal having a phase difference $\theta$ ($0<\theta<\pi$) with respect to the modulated carrier wave S1 by the local oscillation signal S2;
a second comparison means (59) for comparing a signal obtained by the second sampling means (56) with the constant signal;
a first computing means (61) for computing whether a frequency of the modulated carrier wave S1 is higher or lower than a frequency of the local oscillation signal S2 based on a signal $V_1(t)$ obtained by the first comparison means (58) and a signal $V_2(t)$ obtained by the second comparison means (59) ;
a second computing means (60) for computing a difference between a frequency of the modulated carrier wave S1 and a frequency of the local oscillation signal S2 based on the signal $V_1$;
a multiplication means (62) for multiplying a signal $V_3(t)$ obtained by the first computing means (61) with a signal $V_4(t)$ obtained by the second computing means (60) ; and
a DC voltage generating means (71) for supplying a DC voltage to the local oscillation means (57) based on a signal $V_5(t)$ obtained by the multiplication means (62),
wherein the local oscillation means (57) modulates a frequency $f_c$ of the local oscillation signal S2 according to the DC voltage.

11. A signal processing method comprising: an outputting step of outputting a local oscillation signal S2 having a predetermined frequency from a local voltage controlled oscillator;

a first sampling step of sampling an input signal S1 by the local oscillation signal S2;

a first comparison step of comparing a signal obtained in the first sampling step with a constant signal;

a second sampling step of sampling a signal having a phase difference $\theta$ ($0<\theta<\pi$) with respect to the input signal S1 by the local oscillation signal S2;

a second comparison step of comparing a signal obtained in the second sampling step with the constant signal;

a first computing step of computing whether a frequency of the input signal S1 is higher or lower than a frequency of the local oscillation signal S2 based on a signal $V_1(t)$ obtained in the first comparison step and a signal $V_2(t)$ obtained in the second comparison step;

a second computing step of computing a difference between a frequency of the input signal S1 and a frequency of the local oscillation signal S2 based on the signal $V_1$;

a multiplication step of multiplying a signal $V_3(t)$ obtained in the first computing step with a signal $V_4(t)$ obtained in the second computing step; and

a DC voltage generating step of supplying a DC voltage to the local voltage controlled oscillator based on a signal $V_5(t)$ obtained in the multiplication step,

wherein the outputting step modulates a frequency $f_c$ of the local oscillation signal S2 according to the DC voltage.

12. A signal processing method comprising: an outputting step of outputting a local oscillation signal S2 having a predetermined frequency;

a first sampling step of sampling an input signal S1 by the local oscillation signal S2;

a first amplifying step of amplifying a signal obtained in the first sampling step;

a second sampling step of sampling a signal having a phase difference $\theta$ ($0<\theta<\pi$) with respect to the input signal S1 by the local oscillation signal S2;

a second amplifying step of amplifying a signal obtained in the second sampling step;

a computing step of computing whether a frequency of the input signal S1 is higher or lower than a frequency of the local oscillation signal S2 based on a signal $V_1(t)$ obtained in the first amplifying step and a signal $V_2(t)$ obtained in the second amplifying step;

a holding step of temporarily holding the signal $V_1(t)$ obtained in the first amplifying step;

a first switching step of outputting a signal held in the holding step according to a signal supplied from the computing step; and

a second switching step of outputting a signal held in the holding step according to an inversion signal supplied from the computing step.

13. A signal processing device comprising: a local oscillation means (57) for outputting a local oscillation signal S2 having a predetermined frequency;

a first sampling means (54) for sampling an input signal S1 by the local oscillation signal S2;

a first comparison means (58) for comparing a signal obtained by the first sampling means (54) with a constant signal;

a second sampling means (56) for sampling a signal having a phase difference $\theta$ ($0<\theta<\pi$) with respect to the input signal S1 by the local oscillation signal S2;

a second comparison means (59) for comparing a signal obtained by the second sampling means (56) with the constant signal;

a first computing means (61) for computing whether a frequency of the input signal S1 is higher or lower than a frequency of the local oscillation signal S2 based on a signal $V_1(t)$ obtained by the first comparison means (58) and a signal $V_2(t)$ obtained by the second comparison means (59) ;

a second computing means (60) for computing a difference between a frequency of the input signal S1 and a frequency of the local oscillation signal S2 based on the signal $V_1$;

a multiplication means (62) for multiplying a signal $V_3(t)$ obtained by the first computing means (61) with a signal $V_4(t)$ obtained by the second computing means (60) ; and

a DC voltage generating means (71) for supplying a DC voltage to the local oscillation means (57) based on a signal $V_5(t)$ obtained by the multiplication means (62),

wherein the local oscillation means (57) modulates a frequency $f_c$ of the local oscillation signal S2 according to the DC voltage.

14. A signal processing device comprising: a local oscillation means (57) for outputting a local oscillation signal S2 having a predetermined frequency;

a first sampling means (54) for sampling an input signal S1 by the local oscillation signal S2;

a first amplifying means (81) for amplifying a signal obtained by the first sampling means (54) ;

a second sampling means (56) for sampling a signal having a phase difference θ (0<θ<π) with respect to the input signal S1 by the local oscillation signal S2;

a second amplifying means (82) for amplifying a signal obtained by the second sampling means (56) ;

a computing means (67) for computing whether a frequency of the input signal S1 is higher or lower than a frequency of the local oscillation signal S2 based on a signal $V_1(t)$ obtained by the first amplifying means (18) and a signal $V_2(t)$ obtained by the second amplifying means (82) ;

a holding means (83) for temporarily holding the signal $V_1(t)$ obtained by the first amplifying means (81) ;

a first switching means (84) for outputting a signal held in the holding means (83) according to a signal supplied from an output terminal of the computing means (67) ; and

a second switching means (85) for outputting a signal held in the holding means (83) according to a signal supplied from an inverted output terminal from the computing means (67) .

**Amended claims under Art. 19.1 PCT**

**1.** A signal processing method comprising: an outputting step of outputting a local oscillation signal S2 having a predetermined frequency from a local voltage controlled oscillator;

a first sampling step of sampling an input signal S1 by the local oscillation signal S2;

a first comparison step of comparing a signal obtained in the first sampling step with a constant signal;

a second sampling step of sampling a signal having a phase difference θ (0<θ<π) with respect to the input signal S1 by the local oscillation signal S2;

a second comparison step of comparing a signal obtained in the second sampling step with the constant signal;

a first computing step of computing whether a frequency of the input signal S1 is higher or lower than a frequency of the local oscillation signal S2 based on a signal $V_1(t)$ obtained in the first comparison step and a signal $V_2(t)$ obtained in the second comparison step;

a second computing step of computing a difference between a frequency of the input signal S1 and a frequency of the local oscillation signal S2 based on the signal $V_1$;

a multiplication step of multiplying a signal $V_3(t)$ obtained in the first computing step with a signal $V_4(t)$ obtained in the second computing step; and

a DC voltage generating step of supplying a DC voltage to the local voltage controlled oscillator based on a signal $V_5(t)$ obtained in the multiplication step,

wherein the outputting step modulates a frequency $f_c$ of the local oscillation signal S2 according to the DC voltage.

**2.** The signal processing method according to claim 1, comprising a setting step of setting the sampling frequency $f_s$ so that a relationship between a frequency $f_c$ of the local oscillation signal S2 outputted in the outputting step and the sampling frequency $f_s$ satisfies $f_s = 4f_c/(4k+1)$, wherein k is a positive integer.

**3.** A signal processing method comprising: an outputting step of outputting a local oscillation signal S2 having a predetermined frequency;

a first sampling step of sampling an input signal S1 by the local oscillation signal S2;

a first amplifying step of amplifying a signal obtained in the first sampling step;

a second sampling step of sampling a signal having a phase difference θ (0<θ<π) with respect to the input signal S1 by the local oscillation signal S2;

a second amplifying step of amplifying a signal obtained in the second sampling step;

a computing step of computing whether a frequency of the input signal S1 is higher or lower than a frequency of the local oscillation signal S2 based on a signal $V_1(t)$ obtained in the first amplifying step and a signal $V_2(t)$ obtained in the second amplifying step;

a holding step of temporarily holding the signal $V_1(t)$ obtained in the first amplifying step;

a first switching step of outputting a signal held in the holding step according to a signal supplied from the computing step; and

a second switching step of outputting a signal held in the holding step according to an inversion signal supplied from the computing step.

**4.** The signal processing method according to claim 3, comprising a setting step of setting the sampling frequency $f_s$ so that a relationship between a frequency $f_c$ of the local oscillation signal S2 outputted in the outputting step and the sampling frequency $f_s$ satisfies $f_s = 4f_c/(4k+1)$, wherein k is a positive integer.

**5.** A signal processing device comprising: a local oscillation means (57) for outputting a local oscillation signal S2 having a predetermined frequency;

a first sampling means (54) for sampling an input signal S1 by the local oscillation signal S2;

a first comparison means (58) for comparing a signal obtained by the first sampling means (54) with a constant signal;

a second sampling means (56) for sampling a signal having a phase difference θ (0<θ<π) with respect to the input signal S1 by the local oscillation signal S2;

a second comparison means (59) for comparing a signal obtained by the second sampling means (56) with the constant signal;

a first computing means (61) for computing whether a frequency of the input signal S1 is higher or lower than a frequency of the local oscillation signal S2 based on a signal $V_1(t)$ obtained by the first comparison means (58) and a signal $V_2(t)$ obtained by the second comparison means (59) ;

a second computing means (60) for computing a difference between a frequency of the input signal S1 and a frequency of the local oscillation signal S2 based on the signal $V_1$;

a multiplication means (62) for multiplying a signal $V_3(t)$ obtained by the first computing means (61) with a signal $V_4(t)$ obtained by the second computing means (60) ; and

a DC voltage generating means (71) for supplying a DC voltage to the local oscillation means (57) based on a signal $V_5(t)$ obtained by the multiplication means (62),

wherein the local oscillation means (57) modulates a frequency $f_c$ of the local oscillation signal S2 according to the DC voltage.

**6.** The signal processing method according to claim 5, comprising a setting step of setting the sampling frequency $f_s$ so that a relationship between a frequency $f_c$ of the local oscillation signal S2 outputted by the local oscillation means (57) and the sampling frequency $f_s$ satisfies $f_s = 4f_c/(4k+1)$, wherein k is a positive integer.

**7.** A signal processing device comprising: a local oscillation means (57) for outputting a local oscillation signal S2 having a predetermined frequency;

a first sampling means (54) for sampling an input signal S1 by the local oscillation signal S2;

a first amplifying means (81) for amplifying a signal obtained by the first sampling means (54) ;

a second sampling means (56) for sampling a signal having a phase difference θ (0<θ<π) with respect to the input signal S1 by the local oscillation signal S2;

a second amplifying means (82) for amplifying a signal obtained by the second sampling means (56) ;

a computing means (67) for computing whether a frequency of the input signal S1 is higher or lower than a frequency of the local oscillation signal S2 based on a signal $V_1(t)$ obtained by the first amplifying means (18) and a signal $V_2(t)$ obtained by the second amplifying means (82) ;

a holding means (83) for temporarily holding the signal $V_1(t)$ obtained by the first amplifying means (81) ;

a first switching means (84) for outputting a signal held in the holding means (83) according to a signal supplied from an output terminal of the computing means (67) ; and

a second switching means (85) for outputting a signal held in the holding means (83) according to a signal supplied from an inverted output terminal from the computing means (67).

**8.** The signal processing method according to claim 7, comprising a setting step of setting the sampling frequency $f_s$ so that a relationship between a frequency $f_c$ of the local oscillation signal S2 outputted by the local oscillation means (57) and the sampling frequency $f_s$ satisfies $f_s = 4f_c/(4k+1)$, wherein k is a positive integer.

**9.** A wireless reception device that receives a carrier wave S1 modulated by quadrature modulation, samples the modulated carrier wave S1, and performs conversion from an analogue signal to a digital signal, the device comprising:

an A/D converting means (14) for converting the modulated carrier wave S1 from an analogue signal to a digital signal;

a sampling signal generating means (15) for generating a sampling signal for sampling the modulated carrier wave S1 at a frequency $f_s$ of a sampling signal so that a phase relationship of a sampling point of an alias signal generated by sampling the modulated carrier wave S1 at a sampling frequency lower than the frequency of the modulated carrier wave S1 coincides with a phase relationship of a sampling point of the modulated carrier wave S1; and

a demodulating means (36a, 36b) for demodulating data of an I-channel and data of a Q-channel from a signal sampled by the A/D converting means (14),

wherein the sampling signal generating means (15) comprises:

a local oscillation means (57) for outputting a local oscillation signal S2 having a predetermined frequency;

a first sampling means (54) for sampling the modulated carrier wave S1 by the local oscillation signal S2;

a first comparison means (58) for comparing a signal obtained by the first sampling means (54) with a constant signal;

a second sampling means (56) for sampling a signal having a phase difference $\theta$ ($0<\theta<\pi$) with respect to the modulated carrier wave S1 by the local oscillation signal S2;

a second comparison means (59) for comparing a signal obtained by the second sampling means (56) with the constant signal;

a first computing means (61) for computing whether a frequency of the modulated carrier wave S1 is higher or lower than a frequency of the local oscillation signal S2 based on a signal $V_1(t)$ obtained by the first comparison means (58) and a signal $V_2(t)$ obtained by the second comparison means (59) ;

a second computing means (60) for computing a difference between a frequency of the modulated carrier wave S1 and a frequency of the local oscillation signal S2 based on the signal $V_1$;

a multiplication means (62) for multiplying a signal $V_3(t)$ obtained by the first computing means (61) with a signal $V_4(t)$ obtained by the second computing means (60) ; and

a DC voltage generating means (71) for supplying a DC voltage to the local oscillation means (57) based on a signal $V_5(t)$ obtained by the multiplication means (62),

wherein the local oscillation means (57) modulates a frequency $f_c$ of the local oscillation signal S2 according to the DC voltage.

**10.** The wireless reception device according to claim 9, comprising a setting means (70) for setting the sampling frequency $f_s$ so that a relationship between a frequency $f_c$ of the local oscillation signal S2 outputted by the local oscillation means (57) and the sampling frequency $f_s$ satisfies $f_s = 4f_c/(4k+1)$, wherein k is a positive integer.

**11.** A communication reception device that receives a carrier wave S1 modulated by quadrature modulation, samples the modulated carrier wave S1, and performs conversion from an analogue signal to a digital signal, the device comprising:

an A/D converting means (14) for converting the modulated carrier wave S1 from an analogue signal to a digital signal; and

a sampling signal generating means (15) for generating a sampling signal for sampling the modulated carrier wave S1 at a frequency $f_s$ of a sampling signal so that a phase relationship of a sampling point of an alias signal generated by sampling the modulated carrier wave S1 at a sampling frequency lower than the frequency of the modulated carrier wave S1 coincides with a phase relationship of a sampling point of the modulated carrier wave S1; and

a demodulating means (36a, 36b) for demodulating data of an I-channel and data of a Q-channel, which are two types of data orthogonal, from a signal sampled by the A/D converting means (14),

wherein the sampling signal generating means (15) comprises:

a local oscillation means (57) for outputting a local oscillation signal S2 having a predetermined frequency;

a first sampling means (54) for sampling the modulated carrier wave S1 by the local oscillation signal S2;

a first comparison means (58) for comparing a signal obtained by the first sampling means (54) with a constant signal;

a second sampling means (56) for sampling a signal having a phase difference $\theta$ ($0<\theta<\pi$) with respect to the modulated carrier wave S1 by the local oscillation signal S2;

a second comparison means (59) for comparing a signal obtained by the second sampling means (56) with the constant signal;

a first computing means (61) for computing whether a frequency of the modulated carrier wave S1 is higher or lower than a frequency of the local oscillation signal S2 based on a signal $V_1(t)$ obtained by the first comparison means (58) and a signal $V_2(t)$ obtained by the second comparison means (59) ;

a second computing means (60) for computing a difference between a frequency of the modulated carrier wave S1 and a frequency of the local oscillation signal S2 based on the signal $V_1$;

a multiplication means (62) for multiplying a signal $V_3(t)$ obtained by the first computing means (61) with a signal $V_4(t)$ obtained by the second computing means (60) ; and

a DC voltage generating means (71) for supplying a DC voltage to the local oscillation means (57) based on a signal $V_5(t)$ obtained by the multiplication means (62),

wherein the local oscillation means (57) modulates a frequency $f_c$ of the local oscillation signal S2 according to the DC voltage.

**12.** The communication reception device according to claim 11, comprising a setting means (70) for setting the sampling frequency $f_s$ so that a relationship between a frequency $f_c$ of the local oscillation signal S2 outputted by the local oscillation means (57) and the sampling frequency $f_s$ satisfies $f_s = 4f_c/(4k+1)$, wherein k is a positive integer.

# FIG.1

ANALOGUE (RF)   DIGITAL

11

12 BPF → 13 RF CIRCUIT → 14 A/D → 16 DSP

fs=4fc/(4k+1)

15 SAMPLING SIGNAL GENERATION CIRCUIT

# FIG.2

$\frac{T_c}{4}$

$kT_c$

S1  S2

$f_c$

Pa0

Pb0

Pa1

Pb1

Pa2

Pb2

$f_a$

$\frac{T_a}{4}$

$\frac{T_a}{4}$

# FIG.3

I-CHANNEL DATA

23a

BINARY PHASE SHIFT KEYING CIRCUIT

20

CARRIER WAVE GENERATING CIRCUIT

24

90 DEGREE PHASE-SHIFTING CIRCUIT

21

BINARY PHASE SHIFT KEYING CIRCUIT

23b

Q-CHANNEL DATA

# FIG.4

Q-CHANNEL

$(0,1)$ ●          ● $(0,0)$          $(a_i, b_i)$

I-CHANNEL

$(1,1)$ ●          ● $(1,0)$

# FIG.5

WAVEFORM OF I-CHANNEL
WHEN $b_i = 0$

$\cos 2\pi f_c t$

WAVEFORM OF Q- CHANNEL
WHEN $a_i = 0$

$-\sin 2\pi f_c t$

TRANSMITTED
WAVEFORM WHEN
DATA IS (0,0)

$\cos 2\pi f_c t - \sin 2\pi f_c t$

D  C  B  A

# FIG.6

Q-CHANNEL

Q (VALUE OF B POINT)    (0,0)    $(a_i, b_i)$

I-CHANNEL
I (VALUE OF A POINT)

# FIG.7

ANALOGUE
(RF)                    DIGITAL

[31]

[32] BPF → [33] RF CIRCUIT → [34] A/D → [36a] EXTRACTING CIRCUIT → [37a] LPF →

fs=4fc/(4k+1)

[35] SAMPLING SIGNAL GENERATION CIRCUIT

[36b] EXTRACTING CIRCUIT → [37b] LPF →

# FIG.8

$$f_s = \frac{4f_s}{4k+1}$$

$$\frac{\pi}{2}+2k\pi$$

-Q    -I    Q    I

D    C    B    A

# FIG.9

ANALOGUE (RF)          DIGITAL

11

| 32 | 33 | 34 | 36a | 37a |
|---|---|---|---|---|
| BPF | RF CIRCUIT | A/D | EXTRACTING CIRCUIT | LPF |

fs=4fc/(4k+1)

43
DDS

36b
EXTRACTING CIRCUIT

37b
LPF

42
LOOP FILTER

41
SUBTRACTING CIRCUIT

# FIG.10

Q-CHANNEL

Q (VALUE OF B POINT)          ● (0,0)          $(a_i, b_i)$

I-CHANNEL
I (VALUE OF A POINT)

# FIG.11

TRANSMITTED
I-CHANNEL SIGNAL

RECEIVED
I-CHANNEL SIGNAL

TRANSMITTED
Q-CHANNEL SIGNAL

RECEIVED
Q-CHANNEL SIGNAL

# FIG.12

## FIG.13

BPF — 12(32)
RF CIRCUIT — 13(33)
A/D — 13(34)
11(31)

fs=4fc/(4k+1)

SETTING UNIT — 70

50(15)

VOLTAGE CONTROLLER OSCILLATOR (VCO) — 57

fc

EXTERNAL DC UNIT — 71

S/Ha — 54

FIRST COMPARATOR — 58

DIFFERENCE DETECTION CIRCUIT — 60

62
MULTIPLIER

LPF — 63

S/Hb — 56

SECOND COMPARATOR — 59

COMPUTING CIRCUIT — 61

0
Const (GND)

EP 2 124 407 A1

# FIG.14

57

OUTPUT ← VCO ← FROM EXTERNAL DC UNIT 71     50(15)

(COMPARISON SIGNAL S2)     60

53

PULSE
GENERATION
CIRCUIT

64     65     $V_4(t)$

NOT  DELAY ELEMENT     NOR  66

54     58  $V_1(t)$

S/H a          FIRST
COMPARATOR

$\cos(\omega_0 t)$

INPUT
(COMPARED
SIGNAL S1)

55     56

$\theta$     S/H b

$\cos(\omega_0 t+\theta)$

59  $V_2(t)$

SECOND
COMPARATOR

D     X

CLK     Y

D-FlipFlop  67

+     $V_3(t)$
−     68
DIFFERENTIAL
DEVICE

62  $V_5(t)$  63

MULTIPLIER  LF     $V_6(t)$

TO
EXTERNAL
DC UNIT 71

61

51

0
Const
(GND)

52

EP 2 124 407 A1

# FIG.15

S/H a

S/H b

$V_1(t)$    (CLK)

$V_2(t)$    (D)

$V_3(t)$    (X- Y)

## FIG.16

S/H a

S/H b

$V_1(t)$   (CLK)

$V_2(t)$   (D)

$V_3(t)$   (X- Y)

# FIG.17

INPUT SIGNAL ($V_1(T)$ WITHOUT DELAY)

DELAY INVERTER OUTPUT ($V_1(T)$ WITH DELAY)

NOR OUTPUT $V_4(T)$

(0, 0)    (0, 0)

# FIG.18

LPF 63 OUTPUT [$V_6(T)$]

$V_3(t)>0$

$V_3(t)<0$

# FIG.19

$\Delta f_0$

S/H a OUTPUT
COMPARATOR OUTPUT

t

PULSE OUTPUT
LPF 63 OUTPUT

t

$2\Delta f_0$

S/H a OUTPUT
COMPARATOR OUTPUT

t

PULSE OUTPUT
LPF 63 OUTPUT

t

FIG.20

## FIG.21

$f_{RF} > f_{in}$

$V_2(t)$

$\theta$

$V_1(t)$

$T = 1/|f_{RF} - f_{in}|$

## FIG.22

$f_{RF} > f_{in}$

$V_2(t)$

$\theta$

$V_1(t)$

$T = 1/|f_{RF} - f_{in}|$

# FIG.23

FIG.24

FIG.25

# FIG.26

FREQUENCY SIGNAL OF $|f_{RF}-f_{in}|$

$V_{RF}$ (SAMPLED SIGNAL)

$T=1/f_{RF}$

$T=1/|f_{RF}-f_{in}|$

$V_{in}$

$T=1/f_{in}$　SAMPLING PULSE

EP 2 124 407 A1

## FIG.27

$f_{RF} > Nf_{in}$

$V_4(t)$

$\theta$

$V_1(t)$

$T = 1/|f_{RF} - Nf_{in}|$

## FIG.28

$f_{RF} < Nf_{in}$

$V_4(t)$

$\theta$

$V_1(t)$

$T = 1/|f_{RF} - Nf_{in}|$

# FIG.29

ANALOGUE        DIGITAL

(RF)

101

102    103    104    105

BPF → RF CIRCUIT → A/D → DSP

# FIG.30

ANALOGUE        DIGITAL

(RF)      (IF)

201

202    203    204    206    207    208

BPF → RF CIRCUIT → ⊗ → BPF → A/D → DSP

205

LOCAL VOLTAGE CONTROLLED OSCILLATOR

# FIG.31

ANALOGUE · DIGITAL

(RF) · (IF) · (BASEBAND)

<table>
<tr><td colspan="2" align="center">**INTERNATIONAL SEARCH REPORT**</td><td colspan="2">International application No.<br>PCT/JP2008/053406</td></tr>
</table>

A.   CLASSIFICATION OF SUBJECT MATTER
*H04L27/00*(2006.01)i

According to International Patent Classification (IPC) or to both national classification and IPC

B.   FIELDS SEARCHED

Minimum documentation searched (classification system followed by classification symbols)
H04L27/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
    IEEE

C.   DOCUMENTS CONSIDERED TO BE RELEVANT

| Category* | Citation of document, with indication, where appropriate, of the relevant passages | Relevant to claim No. |
|---|---|---|
| X<br>A | JP 2001-45081 A  (Furuno Electric Co., Ltd.),<br>16 February, 2001 (16.02.01),<br>Fig. 5; Par. Nos. [0005] to [0008], [0028],<br>[0045]; Claim 2<br>(Family: none) | 1,2,4,5,7,9<br>3,6,8,10-14 |
| P,A | JP 2007-513562 A  (Koninklijke Philips<br>Electronics N.V.),<br>24 May, 2007 (24.05.07),<br>Fig. 7; Par. No. [0023]<br>& US 2007/0140382 A1 | 1-14 |
| A | JP 2000-32071 A  (Matsushita Electric Industrial<br>Co., Ltd.),<br>28 January, 2000 (28.01.00),<br>Fig. 1; Par. Nos. [0063] to [0064]<br>(Family: none) | 1-14 |

☒   Further documents are listed in the continuation of Box C.          ☐    See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    10 April, 2008 (10.04.08) | Date of mailing of the international search report<br>    22 April, 2008 (22.04.08) |
|---|---|
| Name and mailing address of the ISA/<br>    Japanese Patent Office | Authorized officer |
| Facsimile No. | Telephone No. |

Form PCT/ISA/210 (second sheet) (April 2007)

**EP 2 124 407 A1**

| **INTERNATIONAL SEARCH REPORT** | International application No. |
|---|---|
| | PCT/JP2008/053406 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-232498 A  (Sharp Corp.),<br>16 August, 2002 (16.08.02),<br>Fig. 13; Par. Nos. [0018] to [0020]<br>(Family: none) | 3,6,8,10-14 |
| A | JP 2002-111762 A  (Sony Corp.),<br>12 April, 2002 (12.04.02),<br>Fig. 2<br>(Family: none) | 3,6,8,10-14 |

Form PCT/ISA/210 (continuation of second sheet) (April 2007)

47

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Kiyomichi Araki.** Sofutouea musen no kiso to ouy-ou. SIPEC Ltd, 31 October 2002